# EUROPÄISCHE PATENTSCHRIFT

(11) **EP 4 381 498 B1**
(45) Veröffentlichungstag und Bekanntmachung des Hinweises auf die Patenterteilung: **08.04.2026**
(21) Anmeldenummer: 22760903.9
(22) Anmeldetag: 01.08.2022
(51) Int. Cl.: G10L 13/033, G10L 25/63

(54) **SPRACHSIGNALBEARBEITUNGSVORRICHTUNG, SPRACHSIGNALWIEDERGABESYSTEM UND VERFAHREN ZUM AUSGEBEN EINES ENTEMOTIONALISIERTEN SPRACHSIGNALS**
SPEECH SIGNAL PROCESSING DEVICE, SPEECH SIGNAL PLAYBACK SYSTEM, AND METHOD FOR OUTPUTTING A DE-EMOTIONALIZED SPEECH SIGNAL
DISPOSITIF DE TRAITEMENT DE SIGNAL VOCAL, SYSTÈME DE LECTURE DE SIGNAL VOCAL ET PROCÉDÉ DE SORTIE DE SIGNAL VOCAL SANS ÉMOTION

(30) Priorität: 02.08.2021 DE 102021208344
(43) Veröffentlichungstag der Anmeldung: 12.06.2024
(73) Patentinhaber: Fraunhofer-Gesellschaft zur Förderung der angewandten Forschung e.V., 80686 München (DE)
(72) Erfinder: APPELL, Jens Ekkehart, 98693 Ilmenau (DE); RENNIES-HOCHMUTH, Jan, 98693 Ilmenau (DE); BRUCKE, Matthias, 26180 Rastede (DE)
(74) Vertreter: Hersina, Günter
(86) Internationale Anmeldenummer: PCT/EP2022/071577
(87) Internationale Veröffentlichungsnummer: WO 2023/012116

(56) Entgegenhaltungen:
- EP-A1- 3 144 929
- ZHOU KUN ET AL: "Seen and Unseen Emotional Style Transfer for Voice Conversion with A New Emotional Speech Dataset", ICASSP 2021 - 2021 IEEE INTERNATIONAL CONFERENCE ON ACOUSTICS, SPEECH AND SIGNAL PROCESSING (ICASSP), IEEE, 6 June 2021 (2021-06-06), pages 920 - 924, XP033955490, DOI: 10.1109/ICASSP39728.2021.9413391
- JINGJING XU ET AL: "Unpaired Sentiment-to-Sentiment Translation: A Cycled Reinforcement Learning Approach", ARXIV.ORG, CORNELL UNIVERSITY LIBRARY, 201 OLIN LIBRARY CORNELL UNIVERSITY ITHACA, NY 14853, 14 May 2018 (2018-05-14), XP081260569

## Beschreibung

Die vorliegende Erfindung betrifft eine Sprachsignalbearbeitungsvorrichtung zum Ausgeben eines entemotionalisierten Sprachsignals in Echtzeit oder nach Ablauf einer Zeitspanne, ein Sprachsignalwiedergabesystem sowie ein Verfahren zum Ausgeben eines entemotionalisierten Sprachsignals in Echtzeit oder nach Ablauf einer Zeitspanne und ein computerlesbares Speichermedium.

Bisher ist kein technisches System bekannt, welches ein wesentliches Problem sprachbasierter Kommunikation löst. Die Problematik besteht darin, dass gesprochene Sprache stets mit sogenannten suprasegmentalen Merkmalen (SM) wie Intonation, Sprechgeschwindigkeit, Dauer von Sprachpausen, Intensität bzw. Lautheit usw. angereichert ist. Auch verschiedene Dialekte einer Sprache können zu einem phonetischen Klang der gesprochenen Sprache führen, welche einem Außenstehenden Verständnisprobleme bereiten kann. Ein Beispiel hierfür sind der Norddeutsche Dialekt gegenüber dem süddeutschen Dialekt. Suprasegmentale Merkmale von Sprache sind eine phonologische Eigenschaft, die lautübergreifend Gefühle, Krankheiten und individuelle Besonderheiten andeuten (siehe auch Wikipedia zu "suprasegmentales Merkmal"). Durch diese SM werden insbesondere Emotionen, aber auch inhaltsverändernde Aspekte dem Hörer vermittelt. Allerdings sind nicht alle Menschen in der Lage, mit diesen SM geeignet umzugehen bzw. diese korrekt zu interpretieren.

Beispielsweise ist für Menschen mit Autismus der Zugang zu Emotionen anderer erheblich erschwert. Der Begriff Autismus wird hier der Einfachheit halber sehr pauschal verwendet. Tatsächlich gibt es sehr unterschiedliche Formen und Grade von Autismus (also ein sogenanntes Autismus-Spektrum). Für das Verständnis der Erfindung ist dies aber nicht notwendigerweise zu unterscheiden. Emotionen aber auch Inhaltsveränderungen, die über SM in Sprache eingebettet sind, sind für sie oft nicht erkennbar und/oder sind für sie verwirrend bis hin zur Ablehnung einer Kommunikation über Sprache und der Nutzung von Alternativen, wie geschriebener Sprache oder Bildkarten.

Auch kulturelle Unterschiede oder eine Kommunikation in einer Fremdsprache können den Informationsgewinn aus SM behindern bzw. zu Fehlinterpretationen führen. Auch die Situation, in der sich ein Sprecher befindet (z.B. Feuerwehrleute direkt am Brandherd) kann zu einer emotional sehr stark aufgeladenen Kommunikation (z.B. mit der Einsatzleitung) führen, die die Bewältigung der Situation erschwert. Ein ähnlich gelagertes Problem besteht bei einer besonders komplex formulierten Sprache, die von kognitiv eingeschränkten Menschen nur schwer zu verstehen ist und bei der SM das Verständnis möglicherweise zusätzlich erschweren.

Dem Problem wurde auf verschiedene Weise begegnet oder es blieb schlicht ungelöst. Bei Autismus werden verschiedene alternative Kommunikationswege verwendet (rein textbasierte Interaktion durch z.B. Schreiben von Nachrichten auf einem Tablet, Nutzung von Bildkarten, ...). Bei kognitiven Einschränkungen wird heute teilweise die sogenannte "einfache Sprache" zum Beispiel bei schriftlichen Bekanntmachungen oder auch in speziellen Nachrichtensendungen eingesetzt. Eine Lösung, die in Echtzeit gesprochene Sprache so verändert, dass diese für die oben skizzierten Zielgruppen verständlich ist, ist jedoch nicht bekannt.

Die Veröffentlichung von Zhou Kun et al.: "Seen and unseen Emotional Style Transfer for Voice Conversion with a new Emotional Speech Dataset", ICASSP 2021 -2021 IEEE International Conference on acoustics, speech and signal processing (ICASSP), IEEE, 6. Juni 2021, Seiten 920-924, XP033955490, DOI: 10.1109/ICASSP39728.2021.941339 offenbart einen gesehenen und ungesehenen emotionalen Stiltransfer für die Sprachkonvertierung mit einem neuen emotionalen Sprachdatensatz.

Eine Aufgabe der vorliegenden der Erfindung ist es, Sprachsignalbearbeitungsvorrichtung, Sprachsignalwiedergabesystem und Verfahren bereitzustellen, mit welcher/welchem in Echtzeit ein entemotionalisierte Sprachsignal gesprochener Sprache ausgegeben werden kann.

Diese Aufgabe wird durch die Gegenstände der unabhängigen Patentansprüche gelöst.

Der Kerngedanke der vorliegenden Erfindung besteht darin, eine Transformation eines mit SM behafteten und eventuell besonders komplexen formulierten Sprachsignals in ein von SM Merkmalen ganz oder teilweise befreites und ggf. vereinfacht formuliertes Sprachsignal zur Unterstützung sprachbasierter Kommunikation für bestimmte Hörergruppen, individuelle Hörer bzw. besondere Hörsituationen, bereitzustellen. Bei der vorgeschlagenen Lösung handelt es sich um eine Sprachsignalbearbeitungsvorrichtung, ein Sprachsignalwiedergabesystem und ein Verfahren, welches offline oder in Echtzeit ein Sprachsignal von einzelnen oder mehreren SM befreit und dieses befreite Signal dem Hörer darbietet oder in geeigneter Weise für das spätere Abhören speichert. Dabei kann eine wesentliche Ausprägung die Elimination von Emotionen sein.

Es ist eine Sprachsignalbearbeitungsvorrichtung zum Ausgeben eines entemotionalisierten Sprachsignals in Echtzeit oder nach Ablauf einer Zeitspanne vorgeschlagen. Die Sprachsignalbearbeitungsvorrichtung umfasst eine Sprachsignalerfassungsvorrichtung zum Erfassen eines Sprachsignals. Das Sprachsignal umfasst mindestens eine Emotionsinformation und mindestens eine Wortinformation. Außerdem umfasst die Sprachsignalbearbeitungsvorrichtung eine Analysevorrichtung, welche ein neuronales Netz oder eine künstliche Intelligenz umfasst, die dazu ausgebildet ist, das Sprachsignals hinsichtlich der mindestens einen Emotionsinformation und der mindestens einen Wortinformation zu analysieren, eine Bearbeitungsvorrichtung, welche ein neuronales Netz oder eine künstliche Intelligenz umfasst, die dazu ausgebildet ist, das Sprachsignal in die mindestens eine Wortinformation und in die mindestens eine Emotionsinformation zu trennen und das Sprachsignal zu bearbeiten, wobei die mindestens eine Emotionsinformation entweder anhand von Trainingsdaten oder anhand regelbasierter Transkription erkannter Emotionen, die ihrerseits der Analysevorrichtung interindividuell oder intraindividuell trainiert worden sind, in eine weitere Wortinformation transkribiert wird; und eine Kopplungsvorrichtung und/oder eine Wiedergabevorrichtung, die dazu ausgebildet ist/sind, das Sprachsignal als entemotionalisiertes Sprachsignal wiederzugeben, welches die mindestens eine Emotionsinformation in eine weitere Wortinformation gewandelt und die mindestens eine Wortinformation umfasst. Die mindestens eine Wortinformation kann auch als mindestens eine erste Wortinformation verstanden werden. Die weitere Wortinformation kann als zweite Wortinformation verstanden werden. Vorliegend wird die Emotionsinformation in die zweite Wortinformation transkribiert, sofern die Emotionsinformation in eine Wortinformation transkribiert wird. Der Begriff Information wird vorliegend synonym zu dem Begriff Signal verwendet. Die Emotionsinformation umfasst ein suprasegmentales Merkmal. Bevorzugt umfasst die mindestens eine Emotionsinformation eine oder mehrere suprasegmentale Merkmale. Die erfasste Emotionsinformation wird wie vorgeschlagen entweder gar nicht wiedergeben oder die Emotionsinformation wird zusammen mit der ursprünglichen Wortinformation auch als eine erste und zweite Wortinformation wiedergegen. Hierdurch kann ein Hörer die Emotionsinformation ohne Problem verstehen, sofern die Emotionsinformation als weitere Wortinformation wiedergeben wird. Es ist jedoch auch denkbar, sofern die Emotionsinformation keinen Wesentlich Informationsbeitrag liefert, die Emotionsinformation von dem Sprachsignal zu subtrahieren und nur die ursprüngliche (erste) Wortinformation wiederzugeben. Die Analysevorrichtung könnte vorliegend auch als Erkennersystem bezeichnet werden, da die Analysevorrichtung dazu ausgebildet ist, zu erkennen, welcher Anteil des erfassten Sprachsignales eine Wortinformation und welcher Anteil des erfassten Sprachsignales eine Emotionsinformation beschreibt. Ferner kann die Analysevorrichtung dazu ausgebildet sein, verschiedene Sprecher zu identifizieren. Vorliegend ist mit einem entemotionalisiertem Sprachsignal ein solches Sprachsignal gemeint, welches vollständig oder teilweise von Emotionen befreit ist. Ein entemotionalisiertes Sprachsignal enthält somit nur, insbesondere erste und/oder zweite, Wortinformationen, wobei eine oder auch mehrere Wortinformationen auf einer Emotionsinformation basieren können. Beispielsweise kann sich eine vollständige Emotionsbefreiung bei einer Sprachsynthese mit einer Roboterstimme ergeben. Es ist beispielsweise auch denkbar, eine wütende Roboterstimme zu erzeugen. Eine teilweise Reduktion von Emotionen in dem Sprachsignal könnte durch direkte Manipulation des Sprachaudiomaterials erfolgen, z.B. durch Reduktion einer Pegeldynamik, Reduktion bzw. Limitierung der Grundfrequenz, Veränderung der Sprechrate, Veränderung des spektralen Gehalts der Sprache und/oder Veränderung der Prosodie des Sprachsignals etc.

Das Sprachsignal kann auch aus einem Audiostream (Audiodaten-Strom), z.B. Fernsehen, Radio, Podcast, Hörbuch, entstammen. Eine Sprachsignalerfassungsvorrichtung im engeren Sinne könnte als ein "Mikrophon" verstanden werden. Außerdem könnte die Sprachsignalerfassungsvorrichtung als eine Vorrichtung verstanden werden, welche eine Nutzung eines allgemeinen Sprachsignales aus zum Beispiel den gerade genannten Quellen ermöglicht.

Eine technische Umsetzung der vorgeschlagenen Sprachsignalbearbeitungsvorrichtung beruht auf einer Analyse der Eingangssprache (Sprachsignal) durch eine Analysevorrichtung, wie ein Erkennersystem (z.B. neuronales Netz, künstliche Intelligenz etc.), welches entweder anhand von Trainingsdaten die Überführung in das Zielsignal gelernt hat (Ende-zu-Ende Transkription) oder der regelbasierten Transkription anhand erkannter Emotionen, die ihrerseits einem Erkennersystem interindividuell oder intraindividuell trainiert worden sein können.

Zwei oder mehrere Sprachsignalbearbeitungsvorrichtungen bilden ein Sprachsignalwiedergabesystem. Mit einem Sprachsignalwiedergabesystem können beispielsweise zwei oder mehrere Hörer in Echtzeit von einem Sprecher, welcher Sprachsignale von sich gibt, mit individuell angepassten entemotionalisieren Sprachsignalen versorgt werden. Ein Beispiel hierfür ist der Unterricht in einer Schule oder eine Führung durch ein Museum mit einem Führungsleiter etc.

Ein weiterer Aspekt der vorliegenden Erfindung betrifft ein Verfahren zum Ausgeben eines entemotionalisierten Sprachsignals in Echtzeit oder nach Ablauf einer Zeitspanne. Das Verfahren umfasst ein Erfassen eines Sprachsignals, welches mindestens eine Wortinformation und mindestens eine Emotionsinformation umfasst. Ein Sprachsignal könnte beispielsweise durch einen Vortragenden vor einer Gruppe an Hörern in Echtzeit gegeben werden. Das Verfahren umfasst ferner ein Analysieren des Sprachsignals hinsichtlich der mindestens einen Wortinformation und hinsichtlich der mindestens einen Emotionsinformation. Das Sprachsignal soll hinsichtlich seiner Wortinformation und seiner Emotionsinformation erkannt werden. Die mindestens eine Emotionsinformation umfasst mindestens ein suprasegmentales Merkmal, welches in eine weitere, insbesondere zweite, Wortinformation transkribiert werden soll. Folglich umfasst das Verfahren ein Trennen des Sprachsignals in die mindestens eine Wortinformation und in die mindestens einen Emotionsinformation und ein Bearbeiten des Sprachsignals, wobei die mindestens eine Emotionsinformation entweder anhand von Trainingsdaten oder anhand regelbasierter Transkription erkannter Emotionen, die ihrerseits der Analysevorrichtung interindividuell oder intraindividuell trainiert worden sind, in eine weitere Wortinformation transkribiert wird, und ein Wiedergeben des Sprachsignals als entemotionalisiertes Sprachsignal, welches die mindestens eine Emotionsinformation in eine weitere Wortinformation gewandelt umfasst und/oder die mindestens eine Wortinformation umfasst.

Aus Redundanzgründen werden die Begriffserläuterungen, welche zu der Sprachsignalbearbeitungsvorrichtung gemacht wurden, nicht wiederholt. Es versteht sich jedoch, dass diese Begriffserläuterungen in analoger Weise auch auf das Verfahren anzuwenden sind und andersherum.

Bei der hier beschriebenen technischen Lehre besteht ein Kern darin, dass die in den SM enthaltenen Informationen (also z.B. auch die Emotionen) erkannt werden und diese Information in gesprochener oder geschriebener oder malerischer Weise in das Ausgabesignal eingefügt wird. Beispiel: Ein Sprecher sagt sehr erregt "Es ist eine Frechheit, dass sie mir hier den Zutritt verwehren" könnte in "Ich bin sehr erregt, denn es ist eine Frechheit, dass ..." transkribiert werden.

Ein Vorteil der hierin offenbarten technischen Lehre besteht darin, dass die Sprachsignalbearbeitungsvorrichtung/das Verfahren individuell auf einen Nutzer abgestimmt wird, indem für den Nutzer besonders störende SM-Anteile identifiziert werden. Dies kann besonders für Menschen mit Autismus wichtig sein, da die individuelle Ausprägung und Empfindlichkeit gegenüber SM sehr stark variieren kann. Das Feststellen der individuellen Empfindlichkeit kann z.B. über eine Bedienschnittstelle durch direkte Rückmeldungen oder Eingaben von nahestehenden Personen (z.B. Eltern) erfolgen oder durch neurophysiologische Messungen, wie bspw. Herzratenvariabilität (HRV) oder EEG. Neurophysiologische Messungen wurden in wiss. Studien als Marker für durch akustische Signale hervorgerufenes Empfinden von Stress, Anstrengung oder positiven / negativen Emotionen identifiziert und können somit in Verbindung mit den o.g. Erkennersystemen grundsätzlich zur Ermittlung von Zusammenhängen zwischen SM und individueller Beeinträchtigung eingesetzt werden. Nach Feststellen eines solchen Zusammenhangs kann die Sprachsignalbearbeitungsvorrichtung / das Verfahren die entsprechenden besonders störenden SM-Anteile reduzieren oder unterdrücken, während andere SM-Anteile nicht oder anders bearbeitet werden.

Sofern die Sprache nicht direkt manipuliert wird, sondern die Sprache "künstlich" (also etwa in einem End-to-End Verfahren) ohne SM generiert wird, können auch auf Basis der gleichen Informationen diesem SM-freien Signal die tolerierten SM-Anteile hinzugefügt werden und/oder spezielle SM-Anteile erzeugt werden, die das Verstehen unterstützen können.

Ein weiterer Vorteil der hierin offenbarten technischen Lehre besteht darin, dass eine Wiedergabe des entemotionalisierten Signals zusätzlich zur Modifikation der SM-Anteile an die auditorischen Bedürfnisse des Hörers angepasst werden kann. Es ist z.B. bekannt, dass Menschen mit Autismus besondere Anforderungen an eine gute Sprachverständlichkeit haben und z.B. durch in der Aufnahme enthaltene Störgeräusche besonders leicht von der Sprachinformation abgelenkt werden. Dies kann durch eine ggf. in ihrer Ausprägung individualisierte Störgeräuschreduktion gemindert werden. Ebenso können individuelle Hörstörungen bei der Verarbeitung der Sprachsignale ausgeglichen werden (z.B. durch nichtlineare, frequenzabhängige Verstärkungen, wie sie in Hörgeräten eingesetzt wird), oder das um SM-Anteile reduzierte Sprachsignal wird auf eine verallgemeinerte, nicht individuell abgestimmte Verarbeitung zusätzlich verarbeitet, die z.B. die Klarheit der Stimme erhöht oder Störgeräusche unterdrückt.

Ein besonderes Potential der vorliegenden technischen Lehre wird dabei in der Nutzung bei der Kommunikation mit Autisten und Fremdsprachlern gesehen. Der Ansatz einer wie hier beschriebenen automatisierten Transkription eines Sprachsignals in ein neues, von SM-Anteilen befreites oder in seinen SM-Anteilen geändertes und/oder in ein die in den SM-Anteilen enthaltenen Informationen inhaltlich abbildendes Sprachsignal, welches auch echtzeitfähig ist, erleichtert und verbessert die Kommunikation mit Autisten und/oder Fremdsprachlern, oder mit Personen in emotional aufgeladenen Kommunikationsszenarien (Feuerwehr, Militär, Alarmauslösung, ...), oder mit kognitiv eingeschränkten Personen.

Vorteilhafte Ausgestaltungen der vorliegenden Erfindung sind Gegenstand der abhängigen Patentansprüche. Bevorzugte Ausführungsbeispiele der vorliegenden Erfindung werden nachfolgend Bezug nehmend auf die beiliegenden Zeichnungen detailliert erläutert. Es zeigen:
- Fig. 1: eine schematische Darstellung einer Sprachsignalbearbeitungsvorrichtung;
- Fig. 2: eine schematische Darstellung eines Sprachsignalwiedergabesystems; und
- Fig. 3: ein Flussdiagramm eine vorgeschlagenen Verfahrens.

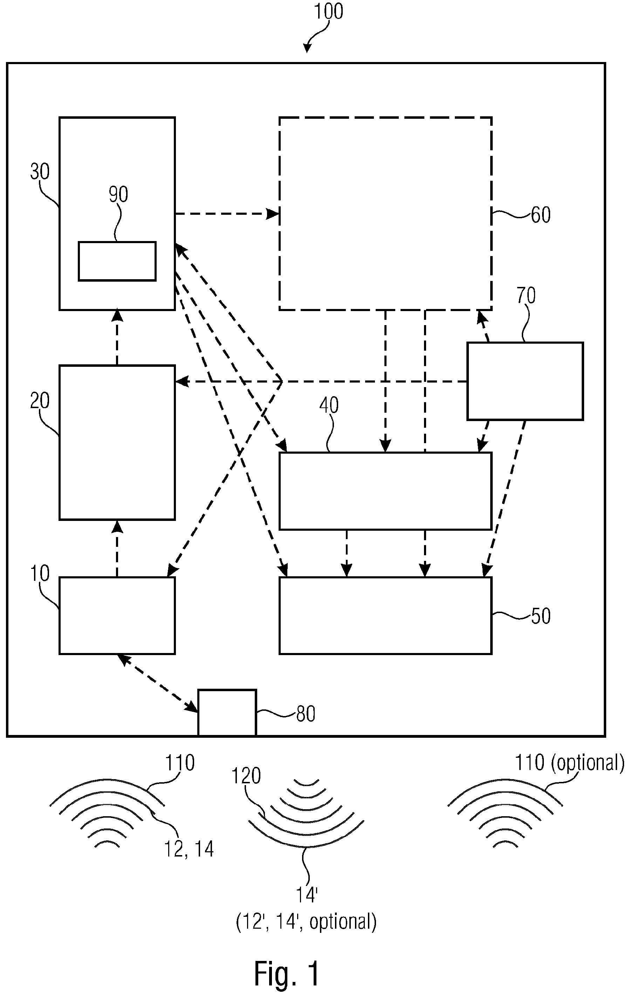

Einzelne Aspekte der hierin beschriebenen Erfindung sind nachfolgend in den Figs. 1 bis 3 beschrieben. In Zusammenschau der Figuren 1 bis 3 wird das Prinzip der vorliegenden Erfindung verdeutlicht. In der vorliegenden Anmeldung betreffen gleiche Bezugszeichen gleiche oder gleichwirkende Elemente, wobei nicht alle Bezugszeichen in allen Zeichnungen, sofern sie sich wiederholen, erneut dargelegt werden.

Sämtlichen Begriffserklärungen, welche in dieser Anmeldung bereitgestellt werden, sind sowohl auf die vorgeschlagene Sprachsignalbearbeitungsvorrichtung, das Sprachsignalwiedergabesystem als auch auf das vorgeschlagenen Verfahren anwendbar. Die Begriffserklärungen werden nicht ständig wiederholt, um Redundanzen möglichst zu vermeiden.

Fig. 1 zeigt eine Sprachsignalbearbeitungsvorrichtung 100 zum Ausgeben eines entemotionalisierten Sprachsignals 120 in Echtzeit oder nach Ablauf einer Zeitspanne. Die Sprachsignalbearbeitungsvorrichtung 100 umfasst eine Sprachsignalerfassungsvorrichtung 10 zum Erfassen eines Sprachsignals 110, welches mindestens eine Emotionsinformation 12 und mindestens eine Wortinformation 14 umfasst. Außerdem umfasst die Sprachsignalbearbeitungsvorrichtung 100 eine Analysevorrichtung 20 zum Analysieren des Sprachsignals 110 hinsichtlich der mindestens einen Emotionsinformation 12 und der mindestens einen Wortinformation 14. Die Analysevorrichtung 20 könnte auch als Erkennersystem bezeichnet werden, da die Analysevorrichtung dazu ausgebildet ist, mindestens eine Emotionsinformation 12 und mindestens eine Wortinformation 14 eines Sprachsignales 110 zu erkennen, sofern das Sprachsignal 110 mindestens eine Emotionsinformation 12 und mindestens eine Wortinformation 14 umfasst. Die Sprachsignalbearbeitungsvorrichtung 100 umfasst ferner eine Bearbeitungsvorrichtung 30 zum Trennen des Sprachsignals 110 in die mindestens eine Wortinformation 14 und in die mindestens eine Emotionsinformation 12 und zum Bearbeiten des Sprachsignals 110. Beim Bearbeiten des Sprachsignals 110 wird die Emotionsinformation 12 in eine weitere, insbesondere zweite, Wortinformation 14' transkribiert. Eine Emotionsinformation 12 ist beispielsweise ein suprasegmentales Merkmal. Außerdem umfasst die Sprachsignalbearbeitungsvorrichtung 100 eine Kopplungsvorrichtung 40 und/oder eine Wiedergabevorrichtung 50 zum Wiedergeben des Sprachsignals 110 als entemotionalisiertes Sprachsignal 120, welches die mindestens eine Emotionsinformation 12 in eine weitere Wortinformation 14' gewandelt und/oder die mindestens eine Wortinformation 14 umfasst. Die Emotionsinformation 12 kann also als weitere Wortinformation 14' in Echtzeit einem Nutzer wiedergegeben werden. Hierdurch können Verständnisprobleme bei dem Nutzer kompensiert werden, insbesondere verhindert werden.

Die vorgeschlagene Sprachsignalbearbeitungsvorrichtung 100 kann sowohl beim Erlernen einer Fremdsprache, beim Verstehen eines Dialektes oder bei kognitiv beeinträchtigten Menschen in vorteilhafter Weise die Kommunikation erleichtern.

Bevorzugt umfasst die Sprachsignalbearbeitungsvorrichtung 100 eine Speichervorrichtung 60, welche das entemotionalisierte Sprachsignal 120 und/oder das erfasste Sprachsignal 110 speichert, um das entemotionalisierte Sprachsignal 120 zu einem beliebigen Zeitpunkt wiederzugeben, insbesondere um das gespeicherte Sprachsignal 110 zu mehren als einem einzigen beliebigen Zeitpunkt als entemotionalisiertes Sprachsignal 120 wiederzugeben. Die Speichervorrichtung 60 ist optional. In der Speichervorrichtung 60 können sowohl das originale Sprachsignal 110, welches erfasst wurde, als auch das bereits entemotionalisierte Sprachsignal 120 gespeichert werden. Hierdurch kann das entemotionalisierte Sprachsignal 120 wiederholt wiedergegeben, insbesondere abgespielt, werden. Ein Nutzer kann daher in Echtzeit zunächst sich das entemotionalisierte Sprachsignal 120 wiedergeben lassen und zu einem späteren Zeitpunkt das entemotionalisierte Sprachsignal 120 erneut wiedergeben lassen. Beispielsweise könnte ein Nutzer ein Schüler in der Schule sein, welche sich das entemotionalisierte Sprachsignal 120 in situ wiedergeben lässt. Bei einer Nachbearbeitung des Lehrstoffes außerhalb der Schule, also zu einem späteren Zeitpunkt, könnte sich der Schüler bei Bedarf das entemotionalisierte Sprachsignal 120 erneut wiedergeben lassen. Hierdurch kann ein Lernerfolg bei dem Nutzer durch die Sprachsignalbearbeitungsvorrichtung 100 unterstützt werden.

Das Speichern des Sprachsignals 110 entspricht einem Speichern eines erfassten Originalsignals. Das gespeicherte Originalsignal kann dann zu einem späteren Zeitpunkt entemotionalisiert wiedergegeben werden. Das Entemotionalisieren kann zu einem späteren Zeitpunkt erfolgen und dann in Echtzeit des Entemotionalisierens wiedergeben werden. Hierdurch kann ein Analysieren und Bearbeiten des Sprachsignals 110 zu einem späteren Zeitpunkt erfolgen.

Ferner ist es denkbar das Sprachsignals 110 zu entemotionalisieren und als entemotionalisiertes Signal 120 zu speichern. Das gespeicherte entemotionalisiertes Signal 120 kann dann zu einem späteren Zeitpunkt, insbesondere wiederholt, wiedergegeben werden.

Je nach Speicherkapazität der Speichervorrichtung 60 ist es ferner denkbar, das Sprachsignal 110 und das dazugehörige entemotionalisierte Signal 120 zu speichern, um beide Signale zu einem späteren Zeitpunkt wiederzugeben. Dies kann beispielsweise dann nützlich sein, wenn individuelle Nutzereinstellungen in einem Nachgang zum erfassten Sprachsignal und dem daraufhin gespeicherten entemotionalisierten Signal 120 geändert werden sollen. Es ist denkbar, dass ein Nutzer mit dem in Echtzeit entemotionalisierten Sprachsignal 120 nicht zufrieden ist, so dass eine Nachbearbeitung des entemotionalisierten Signals 120 durch den Nutzer oder durch eine weitere Person sinnvoll erscheint, sodass zukünftige erfasste Sprachsignale unter Berücksichtigung der Nachbearbeitung des entemotionalisierten Signals 120 entemotionalisiert werden können. Hierdurch kann also das Entemotionalisieren eines Sprachsignals 120 an die individuellen Bedürfnisse eines Nutzer im Nachgang angepasst werden.

Bevorzugt ist die Bearbeitungsvorrichtung 30 dazu ausgebildet, eine Sprachinformation 14, welche in der Emotionsinformation 12 umfasst ist, zu erkennen und in ein entemotionalisiertes Sprachsignal 120 zu übersetzen und zur Wiedergabe durch die Wiedergabevorrichtung 50 an die Wiedergabevorrichtung 50 weitergibt oder an die Kopplungsvorrichtung 40 weitergibt, welche dazu ausgebildet ist, sich mit einer externen Wiedergabevorrichtung (nicht gezeigt) insbesondere einem Smartphone oder Tablet, zu verbinden, um das entemotionalisierte Signal 120 zur Wiedergabe desselben zu übermitteln. Es ist somit denkbar, dass ein und dieselbe Sprachsignalwiedergabevorrichtung 100 das entemotionalisierte Signal 120 mittels einer integrierten Wiedergabevorrichtung 50 der Sprachsignalwiedergabevorrichtung 100 wiedergibt, oder das die Sprachsignalwiedergabevorrichtung 100 das entemotionalisierte Signal 120 mittels einer Kopplungsvorrichtung 40 zu einer externen Wiedergabevorrichtung 50 sendet, um das das entemotionalisierte Signal 120 an der externen Wiedergabevorrichtung 50 wiederzugeben. Bei einer Übersendung des entemotionalisierten Signal 120 an eine externe Wiedergabevorrichtung 50, ist es möglich das entemotionalisierte Signal 120 an eine Mehrzahl externer Wiedergabevorrichtungen 50 zu senden.

Außerdem ist es denkbar, dass das Sprachsignal 110 mittels der Kopplungsvorrichtung an eine Anzahl an externen Sprachsignalbearbeitungsvorrichtungen 100 gesendet wird, wobei jede Sprachsignalbearbeitungsvorrichtung 100 dann das empfangene Sprachsignal 100 nach individuellen Bedürfnissen des jeweiligen Nutzers der Sprachsignalbearbeitungsvorrichtung 100 entemotionalisiert und als entemotionalisiertes Sprachsignal 120 dem entsprechenden Nutzer wiedergibt. Hierdurch kann beispielsweise in einer Schulklasse jedem Schüler auf seine Bedürfnisse zugeschnitten ein entemotionalisierte Signal 120 wiedergegeben werden. Hierdurch kann ein Lernerfolg einer Klasse von Schülern durch das Eingehen auf individuelle Bedürfnisse verbessert werden.

Bevorzugt ist die Analysevorrichtung 20 dazu ausgebildet ist, ein Störgeräusch und/oder eine Emotionsinformation 12 in dem Sprachsignal 110 zu analysieren, und die Bearbeitungsvorrichtung 30 ist dazu ausgebildet, das analysierte Störgeräusch und/oder die Emotionsinformation 12 aus dem Sprachsignal 110 zu entfernen. Wie beispielsweise in Fig. 1 gezeigt können die Analysevorrichtung 20 und die Bearbeitungsvorrichtung 30 zwei verschieden Vorrichtungen sein. Es ist aber auch denkbar, dass die Analysevorrichtung 20 und die Bearbeitungsvorrichtung 30 durch eine einzige Vorrichtung gegeben ist. Der Nutzer, der die Sprachsignalbearbeitungsvorrichtung 100 verwendet, um sich ein entemotionalisiertes Sprachsignal 120 wiedergeben zu lassen, kann nach seinen individuellen Bedürfnissen ein Geräusch als ein Störgeräusch markieren, welches dann automatisch von der Sprachsignalbearbeitungsvorrichtung 100 entfernt werden kann. Außerdem kann die Bearbeitungsvorrichtung eine Emotionsinformation 12, welche keinen wesentlichen Beitrag zu einer Wortinformation 14 liefert, von dem Sprachsignal110 entfernen. Der Nutzer kann eine Emotionsinformation 12, welche keinen wesentlichen Beitrag zu der Wortinformation 14 liefert, nach seinen Bedürfnissen als eine solche markieren.

Wie in Fig. 1 gezeigt, können die verschiedenen Vorrichtungen 10, 20, 30, 40, 50, 60 in einem kommunikativen Austausch stehen (siehe gestrichelte Pfeile). Jeder andere sinnvoller kommunikativer Austausch der verschiedenen Vorrichtungen 10, 20, 30, 40, 50, 60 ist ebenfalls denkbar.

Bevorzugt ist die Wiedergabevorrichtung 50 dazu ausgebildet, das entemotionalisierte Sprachsignal 120 ohne die Emotionsinformation 12 oder mit der Emotionsinformation 12, welche in eine weitere Wortinformation 14' transkribiert ist, und/oder mit einer neu aufgeprägten Emotionsinformation 12' wiederzugeben. Der Nutzer kann nach seinen individuellen Bedürfnissen entscheiden oder markieren, welche Art von aufgeprägter Emotionsinformation 12' für ihn bei der Wiedergabe des entemotionalisierten Signal 120 ein Verständnis des entemotionalisierten Signals 120 fördern kann. Außerdem kann der Nutzer entscheiden oder markieren, welche Art von Emotionsinformation 12 aus dem entemotionalisierten Signal 120 zu entfernen ist. Auch hierdurch kann das Verständnis des entemotionalisierten Signals 120 beim Nutzer gefördert werden. Außerdem kann der Nutzer entscheiden oder markieren, welche Art von Emotionsinformation 12 als weitere insbesondere zweite, Wortinformation 14' transkribiert werden soll, um es in das entemotionalisierte Signal 120 aufzunehmen. Der Nutzer kann also nach seinen individuellen Bedürfnissen das entemotionalisierte Signal 120 derart beeinflussen, das das entemotionalisierten Signal 120 für den Nutzer maximal verständlich ist.

Bevorzugt umfasst die Wiedergabevorrichtung 50 einen Lautsprecher und/oder einen Bildschirm, um das entemotionalisierte Sprachsignal 120, insbesondere in vereinfachter Sprache, durch eine künstliche Stimme und/oder durch Anzeige eines computergeschriebenen Textes und/oder durch Genieren und Anzeigen von Bildkartensymbolen und/oder durch Animation von Gebärdensprache wiederzugeben. Die Wiedergabevorrichtung 50 kann jede für den Nutzer bevorzugte Ausgestaltung annehmen. Das entemotionalisierte Sprachsignal 120 kann derart an der Wiedergabevorrichtung 50 wiedergegeben werden, dass der Nutzer das entemotionalisierte Sprachsignal 120 bestmöglich versteht. Es wäre beispielsweise auch denkbar, das entemotionalisierte Sprachsignal 120 in eine Fremdsprache zu übersetzen, welche eine Muttersprache des Nutzers ist. Außerdem kann das entemotionalisierte Sprachsignal in vereinfachter Sprache wiedergegeben werden, wodurch das Verständnis des Sprachsignal 110 beidem Nutzer verbessert werden kann.

Ein Beispiel dafür, wie Anhand des emotionsbehafteten Sprachmaterials vereinfachte Sprache erzeugt und dabei die Emotionen aber auch Intonationen (bzw. Betonungen in der Aussprache) genutzt werden, um diese in vereinfachter Sprache wieder zu geben, ist Folgendes: Wenn jemand sehr wütend spricht und das Sprachsignal 110 von sich gibt "das darfst Du nicht zu mir sagen" würde das Sprachsignal 110 z.B. durch folgendes entemotionalisierte Sprachsignal 120 ersetzt werden: "Ich bin sehr wütend, denn so etwas darfst Du mir nicht sagen". In diesem Fall würde die Bearbeitungsvorrichtung 30 die Emotionsinformation 12, wonach der Sprechende "sehr wütend ist" in die weitere Wortinformation 14' "Ich bin wütend" transkribieren.

Bevorzugt umfasst die Bearbeitungsvorrichtung 30 ein neuronales Netz, welches dazu ausgebildet ist, die Emotionsinformation 12 auf Basis von Trainingsdaten oder auf Basis einer regelbasierten Transkription in eine weitere Wortinformation 14' zu transkribieren. Eine Möglichkeit des Einsatzes eines neuronalen Netzes wäre eine Ende-zu-Ende Transkription. Bei einer regelbasierten Transkription kann beispielsweise auf einen Inhalt eines Lexikons zurückgegriffen werden. Bei Verwendung eine künstlichen Intelligenz kann diese Basis von Trainingsdaten, welche von dem Nutzer vorgegeben werden, die Bedürfnisse des Nutzers erlenen.

Bevorzugt ist die Sprachsignalbearbeitungsvorrichtung 100 dazu ausgebildet, eine erste und/oder zweite Kontextinformation zu nutzen, um eine aktuelle Ortskoordinate der Sprachsignalbearbeitungsvorrichtung 100 auf Basis der ersten Kontextinformation zu erfassen und/oder auf Basis der zweiten Kontextinformation assoziierte Voreinstellungen zur Transkription an der Sprachsignalbearbeitungsvorrichtung 100 einzustellen. Die Sprachsignalbearbeitungsvorrichtung 100 kann eine GPS-Einheit (nicht gezeigt in den Figs.) und/oder ein Sprechererkennungssystem umfassen, welche dazu ausgebildet sind, eine aktuelle Ortskoordinate der Sprachsignalbearbeitungsvorrichtung 100 zu erfassen und/oder den Sprecher, der das Sprachsignal 110 äußert, zu erkennen und auf Basis der erfassten aktuellen Ortskoordinate und/oder Sprecherinformation assoziierte Voreinstellungen zur Transkription an der Sprachsignalbearbeitungsvorrichtung 100 einzustellen. Die erste Kontextinformation kann ein Erfassen der aktuellen Ortskoordinate der Sprachsignalbearbeitungsvorrichtung 100 umfassen. Die zweite Kontextinformation kann ein Identifizieren eines Sprechers umfassen. Die zweite Kontextinformation kann mit dem Sprechererkennungssystem erfasst werden. Nach einer Identifizierung eines Sprechers kann die Bearbeitung des Sprachsignals 110 an den identifizierten Sprecher angepasst werden, insbesondere können Voreinstellungen, die mit dem identifizierten Sprecher assoziiert sind, eingestellt werden, um das Sprachsignal 110 zu bearbeiten. Die Voreinstellungen können beispielsweise eine Vergabe verschiedener Stimmen für unterschiedliche Sprecher im Falle der Sprachsynthese oder sehr starke Entemotionalisierung in der Schule aber weniger starke Entemotionalisierung des Sprachsignals 110 zu Hause umfassen. Die Sprachsignalbearbeitungsvorrichtung 100 kann somit bei der Bearbeitung von Sprachsignalen 110 zusätzliche, insbesondere erste und/oder zweite, Kontextinformationen nutzen, also beispielsweise Positionsdaten wie GPS, die den aktuellen Standort anzeigen oder ein Sprechererkennungssystem, welches einen Sprecher identifiziert und die Verarbeitung sprechabhängig anpasst. Es ist denkbar, das bei einer Identifizierung verschiedener Sprecher verschiedene Stimmen für die unterschiedlichen Sprecher durch die Sprachsignalbearbeitungsvorrichtung 100 vergeben werden. Dies kann vorteilhaft im Falle der Sprachsynthese oder bei sehr starker Entemotionalisierung in der Schule sein, insbesondere wegen der dort vorherrschenden Hintergrundkulisse durch andere Schüler. In einem häuslichen Umfeld hingegen, kann es sein, dass weniger Entemotionalisierung des Sprachsignals 110 erforderlich ist.

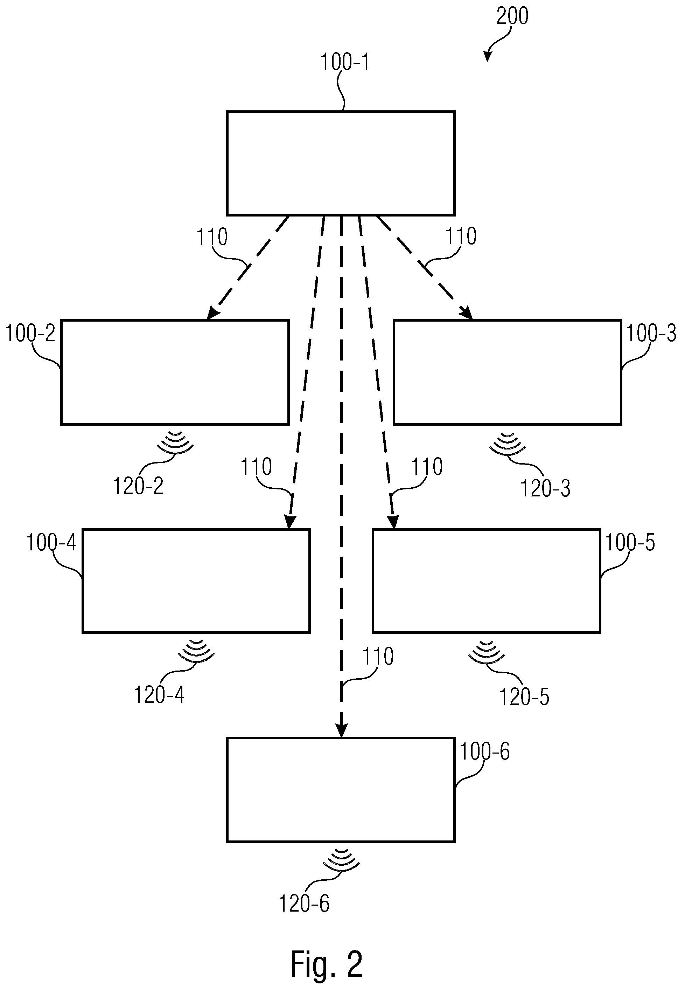

Insbesondere umfasst die Sprachsignalbearbeitungsvorrichtung 100 eine Signalaustauscheinrichtung (nur angedeutet in Fig. 2 durch die gestrichelten Pfeile), welche dazu ausgebildet ist, eine Signalübermittlung von einem erfassten Sprachsignal 110 mit einer oder mehreren anderen Sprachsignalbearbeitungsvorrichtungen 100-1 bis 100-6 vorzunehmen, insbesondere mittels Funk, oder Bluetooth, oder LiFi (Light Fidelity). Die Signalübermittlung kann von Punkt zu Multipunkt verfolgen (s. Fig. 2). Jede der Sprachsignalbearbeitungsvorrichtungen 100-1 bis 100-6 kann dann ein, insbesondere auf die Bedürfnisse des jeweiligen Nutzers angepasstes, entemotionalisierte Signal 120-1, 120-2, 120-3, 120-4, 120-5, 120-6 wiedergeben. Mit anderen Worten, ein und dasselbe erfasste Sprachsignal 110 kann durch jede der Sprachsignalbearbeitungsvorrichtungen 100-1 bis 100-6 in ein unterschiedliches entemotionalisiertes Signal 120-1 bis 120-6 transkribiert werden. In Fig. 2 ist die Übertragung des Sprachsignals 110 unidirektional dargestellt. Eine solche unidirektionale Übertragung des Sprachsignals 110 bietet sich beispielsweise in der Schule an. Denkbar ist es auch, dass zwischen mehreren Sprachsignalbearbeitungsvorrichtungen 100-1 bis 100-6 Sprachsignale 110 bidirektional übertragen werden können. Hierdurch kann beispielsweise eine Kommunikation zwischen den Nutzern der Sprachsignalbearbeitungsvorrichtungen 100-1 bis 100-6 erleichtert werden.

Bevorzugt weist die Sprachsignalbearbeitungsvorrichtung 100 eine Bedienschnittstelle 70 auf, welche dazu ausgebildet ist, die mindestens eine Emotionsinformation 12 gemäß von dem Nutzer eingestellten Präferenzen in eine unerwünschte Emotionsinformation und/oder als in eine neutrale Emotionsinformation und/oder in eine positive Emotionsinformation zu unterteilen. Die Bedienschnittstelle ist bevorzugt mit jeder der Vorrichtungen 10, 20, 30, 40, 50, 60 kommunikativ verbunden. Hierdurch kann jede der Vorrichtungen 10, 20, 30, 40, 50, 60 von dem Nutzer über die Bedienschnittstelle 70 angesteuert werden und ggf. eine Nutzereingabe gemacht werden.

**Beispielsweise** kann ist die Sprachsignalbearbeitungsvorrichtung 100 dazu ausgebildet sein, die mindestens eine erfasste Emotionsinformation 12 in Klassen unterschiedlicher Störqualität zu kategorisieren, insbesondere welche z.B. folgende Zuordnung haben: Klasse 1 "sehr störend", Klasse 2"störend", Klasse 3 "weniger störend" und Klasse 4 "gar nicht störend"; und die mindestens eine erfasste Emotionsinformation 12, welches in eine der Klassen 1 "sehr störend" oder Klasse 2 "störend" kategorisiert worden ist, zu reduzieren oder zu unterdrücken und/oder die mindestens eine erfasste Emotionsinformation 12, welches in einer der Klassen 3 "weniger störend" oder Klasse 4 "garnicht störend" kategorisiert worden ist, zu dem entemotionalisierten Sprachsignal 120 hinzuzufügen und/oder eine generierte Emotionsinformation 12' dem entemotionalisierten Signal 120 hinzuzufügen, um ein Verstehen des entemotionalisierten Sprachsignals 120 durch einen Nutzer zu unterstützen. Andere Formen der Erfassung sind ebenfalls denkbar. Das Beispiel hier soll lediglich eine Möglichkeit angeben, wie Emotionsinformationen 12 klassifiziert werden könnten. Ferner sei angemerkt, dass vorliegend eine generierte Emotionsinformation 12' einer aufgeprägten Emotionsinformation 12' entspricht. Es ist ferner denkbar, erfasste Emotionsinformation 12 in mehr oder weniger als vier Klassen zu kategorisieren.

Bevorzugt weist die Sprachsignalbearbeitungsvorrichtung 100 einen Sensor 80 auf, welcher bei Kontakt mit einem Nutzer dazu ausgebildet ist, unerwünschte und/oder neutrale und/oder positive Emotionssignale für den Nutzer zu identifizieren. Insbesondere ist der Sensor 80 dazu ausgebildet, Biosignale zu messen, wie beispielsweise eine neurophysiologische Messung durchzuführen, oder ein Bild eines Nutzers zu erfassen und auszuwerten. Der Sensor kann durch eine Kamera oder eine Videosystem gegeben sein, mit welcher der Nutzer erfasst wird, um dessen Mimik zu analysieren in Bezug auf ein vom Nutzer wahrgenommenes Sprachsignal 110. Der Sensor kann als eine Neuroschnittstelle verstanden werden. Insbesondere ist der Sensor 80 dazu ausgebildet, den Blutdruck, den Hautleitwert oder dergleichen zu messen. Insbesondere ist eine aktive Markierung einer ungewünschten Emotionsinformation 12 durch den Nutzer möglich, wenn beispielsweise bei eine unerwünschten Emotionsinformation 12 ein erhöhter Blutdruck beim Nutzer durch den Sensor 80 feststellbar ist. Mit dem Sensor 12 kann ferner auch eine positive Emotionsinformation 12 für den Nutzer festgestellt werden, nämlich insbesondere dann, wenn sich der vom Sensor 80 gemessene Blutdruck bei der Emotionsinformation 12 nicht verändert. Die Information über positive oder neutrale Emotionsinformationen 12 können ggf. wichtige Eingabegrößen für die Bearbeitung des Sprachsignals 110, oder für ein Training der Analysevorrichtung 20, oder für die Synthese es entemotionalisierten Sprachsignals 120, etc.

Bevorzugt umfasst die Sprachsignalbearbeitungsvorrichtung 100 eine Ausgleichsvorrichtung 90, welche dazu ausgebildet ist, eine mit dem Nutzer assoziierten individuellen Hörstörung durch, insbesondere nichtlineare und/oder frequenzabhängige Verstärkung des entemotionalisierten Sprachsignals 120 auszugleichen. Durch eine, insbesondere nichtlineare und/oder frequenzabhängige Verstärkung des entemotionalisierten Sprachsignals 120 kann das entemotionalisierte Sprachsignal 120 trotz einer individuellen Hörstörung dem Nutzer akustisch wiedergeben werden.

Fig. 2 zeigt ein Sprachsignalwiedergabesystem 200, welches zwei oder mehrere Sprachsignalbearbeitungsvorrichtungen 100-1 bis 100-6, wie hierin beschrieben umfasst. Ein solches Sprachsignalwiedergabesystem 200 könnte beispielsweise bei einem Unterricht in der Schule angewendet werden. Beispielsweise könnte ein Lehrer in die Sprachsignalbearbeitungsvorrichtung 100-1 sprechen, welche die Sprachsignals 110 erfasst. Über die Kopplungsvorrichtung 40 (s. Fig. 1) der Sprachsignalbearbeitungsvorrichtungen 100-1 könnte dann eine Verbindung zu, insbesondere zu der jeweiligen Kopplungsvorrichtung, den Sprachsignalbearbeitungsvorrichtungen 100-2 bis 100-6 aufgebaut werden, welche das/die erfasste(en) Sprachsignal(e) 110 an die Sprachsignalbearbeitungsvorrichtungen 100-2 bis 100-6 zeitgleich sendet. Jeder der Sprachsignalbearbeitungsvorrichtungen 100-2 bis 100-6 kann dann das empfangene Sprachsignal 110, wie bereit beschrieben, analysieren und Nutzer-individuell in ein entemotionalisiertes Signal 120 transkribieren und den Nutzern wiedergeben. Eine Sprachsignalübertragung von einer Sprachsignalbearbeitungsvorrichtungen 100-1 zu einer anderen Sprachsignalbearbeitungsvorrichtungen 100-2 bis 100-6 kann über Funk, Bluetooth, LiFi etc. erfolgen.

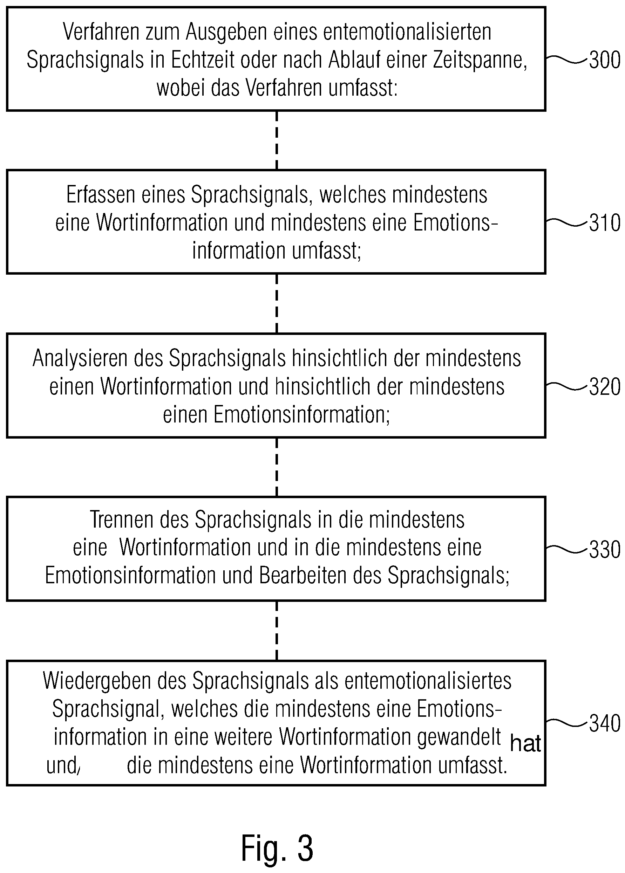

Fig. 3 zeigt ein Verfahren 300 zum Ausgeben eines entemotionalisierten Sprachsignals 120 in Echtzeit oder nach Ablauf einer Zeitspanne. Das Verfahren 300 umfasst zunächst einen Schritt 310 eines Erfassen eines Sprachsignals 110, welches mindestens eine Wortinformation 14 und mindestens eine Emotionsinformation 12 umfasst. Die Emotionsinformation 12 umfasst mindestens ein suprasegmentales Merkmal, welches in eine weitere Wortinformation 14' transkribiert werden kann oder welches von dem Sprachsignal 110 subtrahiert werden kann. In jedem Fall resultiert ein entemotionalisiertes Signal 120. Das zu erfassende Sprachsignal kann in situ gesprochene Sprache einer Person sein oder kann durch eine Mediendatei, oder durch Radio oder durch ein Video, welches abgespielt wird, erzeugt sein.

In dem nachfolgenden Schritt 320 erfolgt ein Analysieren des Sprachsignals 110 hinsichtlich der mindestens einen Wortinformation 14 und hinsichtlich der mindestens einen Emotionsinformation 12. Hierzu ist eine Analysevorrichtung 30 dazu ausgebildet, zu erkennen welcher Sprachsignalanteil des erfassten Sprachsignals 110 einer Wortinformation 14 zuzuordnen ist und welcher Sprachsignalanteil des erfassten Sprachsignals 110 einer Emotionsinformation 12, insbesondere also einer Emotion, zuzuordnen ist.

Nach dem Schritt 320 des Analysierens erfolgt sodann der Schritt 330. Der Schritt 330 umfasst ein Trennen des Sprachsignals 110 in die mindestens eine Wortinformation 14 und in die mindestens einen Emotionsinformation 14 und Bearbeiten des Sprachsignals 110. Hierzu kann eine Bearbeitungsvorrichtung 40 vorgesehen sein. Die Bearbeitungsvorrichtung kann in der Analysevorrichtung 30 integriert sein oder kann als eine zur Analysevorrichtung 30 unabhängige Vorrichtung sein. In jedem Fall sind die Analysevorrichtung 30 und die Bearbeitungsvorrichtung miteinander gekoppelt, so dass nach der Analyse hinsichtlich der Wortinformation 14 und der Emotionsinformation 12, diese beiden Informationen 12, 14 von einander in zwei Signale getrennt werden. Die Bearbeitungsvorrichtung ist ferner dazu konfiguriert, die Emotionsinformation 12, d.h. das Emotionssignal, in eine weitere Wortinformation 14' zu übersetzen oder zu transkribieren. Außerdem ist die Bearbeitungsvorrichtung 40 dazu konfiguriert, alternativ die Emotionsinformation 12 von dem Sprachsignal 110 zu entfernen. In jedem Fall ist die Bearbeitungsvorrichtung dazu konfiguriert, aus dem Sprachsignal 110, welches eine Summe oder Überlagerung der Wortinformation 14 und der Emotionsinformation 12 ist, ein entemotionalisiertes Sprachsignal 120 zu machen. Das entemotionalisierte Sprachsignal 120 umfasst bevorzugt nur, insbesondere erste und zweite, Wortinformationen 14, 14' oder Wortinformationen 14, 14' und eine oder mehrere Emotionsinformationen 12, welche durch einen Nutzer als zulässig, insbesondere akzeptabel oder nicht störend, klassifiziert worden sind.

Zuletzt erfolgt Schritt 340, wonach ein Wiedergeben des Sprachsignals 110 als entemotionalisiertes Sprachsignal 120 erfolgt, welches die mindestens eine Emotionsinformation 12 in eine weitere Wortinformation 14' gewandelt umfasst und die mindestens eine Wortinformation 14 umfasst.

Mit dem vorgeschlagenen Verfahren 300 bzw. mit der vorgeschlagenen Sprachsignalwiedergabevorrichtung 100 können in Echtzeit oder nach Ablauf eines Zeitintervalls, also zu einem späteren Zeitpunkt, ein in situ erfasstes Sprachsignal 110 dem Nutzer als entemotionalisiertes Sprachsignal 120 wiedergegeben werden, was zur Folge hat, dass der Nutzer, welcher bei einem Verstehen des Sprachsignals 110 ansonsten Probleme haben könnte, das entemotionalisiertes Sprachsignal 120 im Wesentlichen ohne Probleme verstehen kann.

Bevorzugt umfasst das Verfahren 300 ein Speichern des entemotionalisierten Sprachsignals 120 und/oder des erfassten Sprachsignals 110; und Wiedergeben des entemotionalisierten Sprachsignals 120 und/oder des erfassten Sprachsignals 120 zu einem beliebigen Zeitpunkt. Beim Speichern des Sprachsignals 110 werden beispielsweise die Wortinformation 14 und die Emotionsinformation 12 gespeichert, während beim Speichern des entemotionalisierten Sprachsignals 120 beispielsweise die Wortinformation 14 und das in eine weitere Wortinformation 14' transkribierte Emotionssignal 12 gespeichert werden. Beispielsweise kann ein Nutzer oder eine weitere Person, das Sprachsignal 110 sich wiedergeben lasen, insbesondere abhören, und mit dem entemotionalisierten Sprachsignals 120 vergleichen. Für den Fall, dass die Emotionsinformation nicht ganz zutreffend in eine weitere Wortinformation 14' transkribiert worden ist, kann der Nutzer oder die weitere Person die transkribierte weitere Wortinformation 14' ändern, insbesondere korrigieren. Bei Verwendung eine Künstlichen Intelligenz (Kl) kann das für einen Nutzer korrekte Transkribieren einer Emotionsinformation 12 in eine weitere Wortinformation 14' erlernt werden. Eine KI kann beispielsweise auch erlernen, welche Emotionsinformationen 12 den Nutzer nicht stören, oder ihn sogar positiv tangieren, oder einem Nutzer neutral erscheinen.

Bevorzugt umfasst das Verfahren 300 ein Erkennen der mindestens einen Emotionsinformation 12 in dem Sprachsignal 110; und ein Analysieren der mindestens einen Emotionsinformation 12 hinsichtlich möglicher Transkriptionen des mindestens einen Emotionssignals 12 in n verschiedene weitere, insbesondere zweite, Wortinformationen 14', wobei n eine natürliche Zahl größer oder gleich 1 ist und n eine Anzahl der Möglichkeiten angibt, die mindestens eine Emotionsinformation 12 zutreffend in die mindestens eine weiteren Wortinformation 14' zu transkribieren; und ein Transkribieren der mindestens einen Emotionsinformation 12 in die n verschiedenen weiteren Wortinformationen 14'. Beispielsweise kann eine inhaltsverändernde SM in einem Sprachsignal 110 in n verschieden geänderte Inhalte transkribiert werden. Beispiel: Der Satz "Fährst Du heute nach Oldenburg?" kann je nach Betonung unterschiedlich verstanden werden. Betont man "Fährst", würde eine Antwort erwartet wie "nein, ich fliege nach Oldenburg", betont man hingegen "Du", würde eine Antwort erwartet wie "nein, nicht ich fahre nach Oldenburg, sondern ein Kollege". Eine Transkription könnte im ersten Falle sein "Du wirst heute in Oldenburg sein, wirst Du dorthin fahren?". Je nach Betonung können also unterschiedliche zweite Wortinformationen 14' aus einer einzigen Emotionsinformation 12 resultieren.

Bevorzugt umfasst das Verfahren 300 ein Identifizieren von unerwünschten und/oder neutralen und/oder positiven Emotionsinformationen durch einen Nutzer mittels einer Bedienschnittstelle 70. Der Nutzer der Sprachsignalbearbeitungsvorrichtung 100 kann beispielsweise über die Bedienschnittstelle 70 definieren, welche Emotionsinformation 12 er als störend, als neutral oder als positiv empfindet. Beispielsweise kann dann eine als störend empfundene Emotionsinformation 12 als notwendig zu transkribierende Emotionsinformation behandelt werden, während eine positiv oder neutral empfundene Emotionsinformation 12 unverändert in dem entemotionalisierten Sprachsignal 120 verbleiben darf.

Bevorzugt umfasst das Verfahren 300 ferner oder alternativ ein Identifizieren von unerwünschten und/oder neutralen und/oder positiven Emotionsinformationen 12 mittels eines Sensors 80, welcher dazu ausgebildet ist, eine neurophysiologische Messung durchzuführen. Der Sensor 80 kann somit eine Neuroschnittstelle sein. Eine Neuroschnittstelle ist nur als Beispiel genannt. Es ist ferner denkbar andere Sensoren vorzusehen. Beispielsweise könnte ein Sensor 80 oder mehrere Sensoren 80 vorgesehen sein, welche dazu ausgebildet ist, unterschiedliche Messgrößen zu erfassen, insbesondere den Blutdruck, die Herzrate und/oder den Hautleitwert des Nutzer.

Das Verfahren 300 kann ein Kategorisieren der mindestens einen erfassten Emotionsinformation 12 in Klassen unterschiedlicher Störqualität umfassen, insbesondere wobei die Klassen z.B. folgende Zuordnung haben können: Klasse 1 "sehr störend", Klasse 2"störend", Klasse 3 "weniger störend" und Klasse 4 "garnicht störend". Ferner kann das Verfahren ein Reduzieren oder Unterdrücken der mindestens einen erfassten Emotionsinformation 12, welches in eine der Klassen 1 "sehr störend" oder Klasse 2"störend" kategorisiert worden ist und/oder ein Hinzufügen der mindestens einen erfassten Emotionsinformation 12, welches in einer der Klassen 3 "weniger störend" oder Klasse 4 "garnicht störend" kategorisiert worden ist, zu dem entemotionalisierten Sprachsignal und/oder ein Hinzufügen von einer generierten Emotionsinformation 12' umfassen, um ein Verstehen des entemotionalisierten Sprachsignals 120 durch einen Nutzer zu unterstützen. Ein Nutzer kann das Verfahren 300 somit auf seine individuellen Bedürfnisse zuschneiden.

Bevorzugt umfasst das Verfahren 300 ein Wiedergeben des entemotionalisierten Sprachsignals 120, insbesondere in vereinfachter Sprache, durch eine künstliche Stimme und/oder durch Anzeige eines computergeschriebenen Textes und/oder durch Generieren und Anzeigen von Bildkartensymbolen und/oder durch Animation von Gebärdensprache. Vorliegend kann das entemotionalisierte Sprachsignal 120 dem Nutzer seinen individuellen Bedürfnissen angepasst wiedergegeben werden. Die obige Aufzählung ist nicht abschließend. Vielmehr sind auch noch weitere Arten des Wiedergebens möglich. Hierdurch kann das Sprachsignal 110 in vereinfachter Sprache insbesondere in Echtzeit, wiedergegeben werden. Die erfassten, insbesondere aufgenommenen, Sprachsignale 100 können nach Transkribieren in ein entemotionalisiertes Signal 120 beispielsweise durch eine künstliche Stimme ersetzt werden, die keine oder reduzierte SM-Anteile enthält bzw. die die als individuell besonders störend identifizierten SM-Anteile nicht mehr enthält. Beispielsweise könnte immer dieselbe Stimme an eine Person mit Autismus weitergegeben werden, auch wenn sie von unterschiedlichen Gesprächspartnern stammt (z.B. unterschiedliche Lehrer), falls dies den individuellen Bedürfnissen der Kommunikation entspricht.

Beispielsweise könnte der Satz "In einem immer größer werdenden Tumult hielten die Leute Plakate mit der Aufschrift ,Keine Gewalt' in die Höhe, doch die Polizisten prügelten mit Schlagstöcken auf sie ein." wie folgt in vereinfachter Sprache transkribiert werden: "Immer größer wurde der Tumult. Leute hielten Plakate mit der Aufschrift ,Keine Gewalt' in die Höhe. Polizisten prügelten mit Schlagstöcken auf sie ein."

Bevorzugt umfasst das Verfahren 300 ein Ausgleichen einer mit dem Nutzer assoziierten individuellen Hörstörung durch, insbesondere nichtlineare und/oder frequenzabhängige Verstärkung des entemotionalisierten Sprachsignals 120. Hierdurch kann dem Nutzer ein Hörerlebnis geboten werden, sofern das entemotionalisierte Sprachsignal 120 dem Nutzer akustisch wiedergegeben wird, welches einem Hörerlebnis eines Nutzers ähnelt, der keine Hörstörung aufweist.

Bevorzugt umfasst das Verfahren 300 ein Analysieren, ob ein, insbesondere durch einen Nutzer individuell definiertes, Störgeräusch in dem erfassten Sprachsignal 110 detektiert wird, und ein ggf. anschließendes Entfernen des detektierten Störgeräusches. Störgeräusche können beispielsweise Hintergrundgeräusche wie ein bellender Hund, andere Mitmenschen, oder Verkehrslärm etc. sein. Sofern die Sprache bzw. Störgeräusch nicht direkt manipuliert werden, sondern die Sprache "künstlich" (also etwa in einem Ende-zu-Ende Verfahren) erzeugt wird, werden in diesem Zuge automatisch störende Geräusche entfernt. Aspekte wie eine individuelle oder subjektive Verbesserung der Klarheit, Angenehmheit oder Vertrautheit können dabei im Training berücksichtigt oder nachträglich aufgeprägt werden.

Bevorzugt umfasst das Verfahren 300 ein Detektieren einer aktuellen Ortskoordinate mittels GPS, woraufhin ein Einstellen von mit der detektierten Ortskoordinate assoziierten Voreinstellungen zur Transkription von an der aktuellen Ortskoordinate erfassten Sprachsignalen 110. Dadurch, dass ein aktueller Aufenthaltsort detektierbar ist, wie beispielsweise die Schule oder das eigene zu Hause oder ein Supermarkt, können Voreinstellungen, die mit dem jeweiligen Aufenthaltsort assoziiert sind und die Transkription von erfassten Sprachsignalen 110 an dem jeweiligen Aufenthaltsort betreffen, automatisch geändert bzw. angepasst werden.

Bevorzugt umfasst das Verfahren 300 ein Übertragen eines erfassten Sprachsignales 110 von einer Sprachsignalbearbeitungsvorrichtung 100, 100-1 zu einer anderen Sprachsignalbearbeitungsvorrichtung 100 oder zu mehreren Sprachsignalbearbeitungsvorrichtungen 100, 100-2 bis 100-6 mittels Funk, oder Bluetooth, oder LiFi (Light Fidelity). Bei Verwendung von LiFi könnten Signale in einem direkten oder einem indirekten Sichtfeld übermittelt werden. Beispielsweise könnte eine Sprachsignalbearbeitungsvorrichtung 100 ein Sprachsignal 110, insbesondere optisch, an eine Leitschnittstelle senden, an welche das Sprachsignal 110 zu verschiedenen Ausgängen geleitet wird und an den verschiedenen an die Sprachsignalbearbeitungsvorrichtungen 100, 100-2 bis 100-6 verteilt wird. Jeder der verschiedenen Ausgängen kann mit einer Sprachsignalbearbeitungsvorrichtung 100 kommunikativ koppelbar sein.

Ein weiterer Aspekt der vorliegenden Anmeldung betrifft computerlesbares Speichermedium, umfassend Befehle, die bei der Ausführung durch einen Computer, insbesondere einer Sprachsignalbearbeitungsvorrichtung 100, diesen veranlassen, das Verfahren, wie hierin beschrieben auszuführen. Insbesondere kann der Computer, insbesondere Sprachsignalbearbeitungsvorrichtung 100, durch ein Smartphone, ein Tablet, eine Smartwatch etc. gegeben sein.

Obwohl manche Aspekte im Zusammenhang mit einer Vorrichtung beschrieben wurden, versteht es sich, dass diese Aspekte auch eine Beschreibung eines entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Auf eine Darstellung der vorliegenden Erfindung in Form von Verfahrensschritten wird vorliegend aus Redundanzgründen abgesehen. Einige oder alle der Verfahrensschritte könnten durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden

In der vorhergehenden detaillierten Beschreibung wurden teilweise verschiedene Merkmale in Beispielen zusammen gruppiert, um die Offenbarung zu rationalisieren. Diese Art der Offenbarung soll nicht als die Absicht interpretiert werden, dass die beanspruchten Beispiele mehr Merkmale aufweisen als ausdrücklich in jedem Anspruch angegeben sind. Vielmehr kann, wie die folgenden Ansprüche wiedergeben, der Gegenstand in weniger als allen Merkmalen eines einzelnen offenbarten Beispiels liegen. Folglich werden die folgenden Ansprüche hiermit in die detaillierte Beschreibung aufgenommen, wobei jeder Anspruch als ein eigenes separates Beispiel stehen kann. Während jeder Anspruch als ein eigenes separates Beispiel stehen kann, sei angemerkt, dass, obwohl sich abhängige Ansprüche in den Ansprüchen auf eine spezifische Kombination mit einem oder mehreren anderen Ansprüchen zurückbeziehen, andere Beispiele auch eine Kombination von abhängigen Ansprüchen mit dem Gegenstand jedes anderen abhängigen Anspruchs oder einer Kombination jedes Merkmals mit anderen abhängigen oder unabhängigen Ansprüchen umfassen. Solche Kombinationen seien umfasst, es sei denn es ist ausgeführt, dass eine spezifische Kombination nicht beabsichtigt ist. Ferner ist beabsichtigt, dass auch eine Kombination von Merkmalen eines Anspruchs mit jedem anderen unabhängigen Anspruch umfasst ist, selbst wenn dieser Anspruch nicht direkt abhängig von dem unabhängigen Anspruch ist.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das die vorgeschlagene Lehre ausführbare digitale Speichermedium computerlesbar sein.

Manche Ausführungsbeispiele gemäß der hierin beschriebenen Lehre umfassen also einen Datenträger, der elektronisch lesbare Steuersignale aufweist, die in der Lage sind, mit einem programmierbaren Computersystem derart zusammenzuwirken, dass eines der hierin beschriebenen Merkmale als Verfahren durchgeführt wird.

Allgemein können Ausführungsbeispiele der hierin beschriebenen Lehre als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Merkmals als Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel eines vorgeschlagenen Verfahrens ist somit ein Datenträger (oder ein digitales Speichermedium oder ein computerlesbares Medium), auf dem das Computerprogramm zum Durchführen eines der hierin beschriebenen Merkmale als Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des vorgeschlagenen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, das dahingehend konfiguriert oder angepasst ist, ein Verfahren zu dem hierin beschriebenen System durchzuführen.

Ein weiteres Ausführungsbeispiel umfasst einen Computer, auf dem das Computerprogramm zum Durchführen des Verfahrens zu dem hierin beschriebenen System installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Merkmals in Form eines Verfahrens zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren und Vorrichtungen durchzuführen. Bei manchen Ausführungsbeispielen kann ein feldprogrammierbares Gatterarray mit einem Mikroprozessor zusammenwirken, um das hierin beschriebene Verfahren durchzuführen. Allgemein wird das Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sprachsignalbearbeitungsvorrichtung (100) zum Ausgeben eines entemotionalisierten Sprachsignals (120), wobei die Sprachsignalbearbeitungsvorrichtung (100) umfasst:
- eine Sprachsignalerfassungsvorrichtung (10), die dazu ausgebildet ist, ein Sprachsignal (110) zu erfassen, welches mindestens eine Emotionsinformation (12) und mindestens eine Wortinformation (14) umfasst;
- eine Analysevorrichtung (20), welche ein neuronales Netz oder eine künstliche Intelligenz umfasst, die dazu ausgebildet ist, das Sprachsignal (110) hinsichtlich der mindestens einen Emotionsinformation (12) und der mindestens einen Wortinformation (14) zu analysieren,
eine Bearbeitungsvorrichtung (30), welche ein neuronales Netz oder eine künstliche Intelligenz umfasst, die dazu ausgebildet ist, das Sprachsignal (110) in die mindestens eine Wortinformation (14) und in die mindestens eine Emotionsinformation (12) zu trennen und das Sprachsignal (110) zu bearbeiten, wobei die mindestens eine Emotionsinformation (12) entweder anhand von Trainingsdaten oder anhand regelbasierter Transkription erkannter Emotionen, die ihrerseits der Analysevorrichtung (20) interindividuell oder intraindividuell trainiert worden sind, in eine weitere Wortinformation transkribiert wird; und
- eine Kopplungsvorrichtung (40) und/oder eine Wiedergabevorrichtung (50), die dazu ausgebildet ist/sind, das Sprachsignal (110) als entemotionalisiertes Sprachsignal (120) wiederzugeben, welches die mindestens eine Emotionsinformation (12) in die weitere Wortinformation (14') gewandelt und die mindestens eine Wortinformation (14) umfasst.

2. Sprachsignalbearbeitungsvorrichtung (100) nach Anspruch 1, welche eine Speichervorrichtung (60) umfasst, welche das entemotionalisierte Sprachsignal (120) und/oder das erfasste Sprachsignal (110) speichert, um das entemotionalisierte Sprachsignal (120) zu einem beliebigen Zeitpunkt wiederzugeben, insbesondere um das gespeicherte Sprachsignal (110) zu mehr als einem einzigen beliebigen Zeitpunkt als entemotionalisiertes Sprachsignal (120) wiederzugeben.

3. Sprachsignalbearbeitungsvorrichtung (100) nach einem der vorherigen Ansprüche, wobei die Bearbeitungsvorrichtung (30) dazu ausgebildet ist, die weitere Wortinformation (14'), welche in der Emotionsinformation (12) umfasst ist, zu erkennen und in ein entemotionalisiertes Sprachsignal (120) zu übersetzen und zur Wiedergabe durch die Wiedergabevorrichtung (50) an die Wiedergabevorrichtung (50) weitergibt oder an die Kopplungsvorrichtung (40) weitergibt, welche dazu ausgebildet ist, sich mit einer externen Wiedergabevorrichtung (50), insbesondere einem Smartphone oder Tablet, zu verbinden, um das entemotionalisierte Signal (120) zur Wiedergabe desselben zu übermitteln.

4. Sprachsignalbearbeitungsvorrichtung (100) nach einem der vorherigen Ansprüche, wobei die Analysevorrichtung (30) dazu ausgebildet ist, ein Störgeräusch und/oder eine Emotionsinformation (12) in dem Sprachsignal (110) zu analysieren, und die Bearbeitungsvorrichtung (40) dazu ausgebildet ist, das analysierte Störgeräusch und/oder die Emotionsinformation (12) aus dem Sprachsignal (110) zu entfernen,
oder
wobei die Analysevorrichtung (50) ein neuronales Netz umfasst, welches dazu ausgebildet ist, die Emotionsinformation (12) auf Basis von Trainingsdaten oder auf Basis einer regelbasierten Transkription in die weitere Wortinformation (14') zu transkribieren.

5. Sprachsignalbearbeitungsvorrichtung (100) nach einem der vorherigen Ansprüche, wobei die Wiedergabevorrichtung (50) dazu ausgebildet ist, das entemotionalisierte Sprachsignal (120) ohne die Emotionsinformation (12) oder mit der Emotionsinformation (12), welche in die weitere Wortinformation (14') transkribiert ist, und/oder mit einer neu aufgeprägten Emotionsinformation (12') wiederzugeben,
oder, wobei die Wiedergabevorrichtung (50) einen Lautsprecher und/oder einen Bildschirm umfasst, um das entemotionalisierte Sprachsignal (120), insbesondere in vereinfachter Sprache, durch eine künstliche Stimme und/oder durch Anzeige eines computergeschriebenen Textes und/oder durch Generieren und Anzeigen von Bildkartensymbolen und/oder durch Animation von Gebärdensprache wiederzugeben.

6. Sprachsignalbearbeitungsvorrichtung (100) nach einem der vorherigen Ansprüche, wobei die Sprachsignalbearbeitungsvorrichtung (100) eine GPS-Einheit und/oder ein Sprechererkennungssystem umfassen, welche dazu ausgebildet sind, eine aktuelle Ortskoordinate der Sprachsignalbearbeitungsvorrichtung (100) zu erfassen und/oder den Sprecher, der das Sprachsignal (110) äußert, zu erkennen und auf Basis der erfassten aktuellen Ortskoordinate und/oder Sprecherinformation assoziierte Voreinstellungen zur Transkription an der Sprachsignalbearbeitungsvorrichtung (100) einzustellen, oder
welche eine Signalaustauscheinrichtung umfasst, welche dazu ausgebildet ist, eine Signalübermittlung von einem erfassten Sprachsignal mit einer oder mehreren anderen Sprachsignalbearbeitungsvorrichtungen (100,100-1 bis 100-6) vorzunehmen, insbesondere mittels Funk, oder Bluetooth, oder LiFi (Light Fidelity).

7. Sprachsignalbearbeitungsvorrichtung (100) nach einem der vorherigen Ansprüche, welche eine Bedienschnittstelle (70) aufweist, welche dazu ausgebildet ist, die mindestens eine Emotionsinformation (12) gemäß von einem Nutzer eingestellten Präferenzen als in eine unerwünschte Emotionsinformation und/oder in eine neutrale Emotionsinformation und/oder in eine positive Emotionsinformation zu unterteilen, oder
welche dazu ausgebildet ist, die mindestens eine erfasste Emotionsinformation (12) in Klassen unterschiedlicher Störqualität zu kategorisieren, insbesondere welche beispielsweise folgende Zuordnung haben: Klasse 1 "sehr störend", Klasse 2"störend", Klasse 3 "weniger störend" und Klasse 4 "garnicht störend"; und
die mindestens eine erfasste Emotionsinformation (12), welche in eine der Klassen 1 "sehr störend" oder Klasse 2"störend" kategorisiert worden ist, zu reduzieren oder zu unterdrücken und/oder
der mindestens einen erfassten Emotionsinformation (12), welche in einer der Klassen 3 "weniger störend" oder Klasse 4 "garnicht störend" kategorisiert worden ist, zu dem entemotionalisierten Sprachsignal (120) hinzuzufügen und/oder eine generierte Emotionsinformation (12') dem entemotionalisierten Signal hinzuzufügen, um ein Verstehen des entemotionalisierten Sprachsignals (120) durch einen Nutzer zu unterstützen.

8. Sprachsignalbearbeitungsvorrichtung (100) nach einem der vorherigen Ansprüche, welche einen Sensor (80) aufweist, welcher bei Kontakt mit einem Nutzer dazu ausgebildet ist, unerwünschte und/oder neutrale und/oder positive Emotionsinformationen (12) für den Nutzer entweder anhand von Trainingsdaten oder anhand regelbasierter Transkription erkannter Emotionen, die ihrerseits der Analysevorrichtung (20) interindividuell oder intraindividuell trainiert worden sind zu identifizieren, wobei der Sensor (80) dazu ausgebildet ist, Biosignale zu messen, wie beispielsweise eine neurophysiologische Messung durchzuführen, oder ein Bild eines Nutzers zu erfassen und auszuwerten.

9. Sprachsignalbearbeitungsvorrichtung (100) nach einem der vorherigen Ansprüche, welche eine Ausgleichsvorrichtung (90) umfasst, welche dazu ausgebildet ist, eine mit einem Nutzer assoziierten individuellen Hörstörung durch nichtlineare und/oder frequenzabhängige Verstärkung des entemotionalisierten Sprachsignals (120) auszugleichen.

10. Sprachsignalwiedergabesystem (200), welches zwei oder mehrere Sprachsignalbearbeitungsvorrichtungen (100,100-1 bis 100-6) nach einem der vorherigen Ansprüche umfasst.

11. Verfahren (300) zum Ausgeben eines entemotionalisierten Sprachsignals (120) in Echtzeit oder nach Ablauf einer Zeitspanne, wobei das Verfahren (300) umfasst:
Erfassen (310) eines Sprachsignals (110), welches mindestens eine Wortinformation (14) und mindestens eine Emotionsinformation (12) umfasst;
Analysieren (320) des Sprachsignals (110) hinsichtlich der mindestens einen Wortinformation (14) und hinsichtlich der mindestens einen Emotionsinformation (12);
Trennen (330) des Sprachsignals in die mindestens eine Wortinformation (14) und in die mindestens einen Emotionsinformation (12) und Bearbeiten des Sprachsignals (110), wobei die mindestens eine Emotionsinformation (12) entweder anhand von Trainingsdaten oder anhand regelbasierter Transkription erkannter Emotionen, die ihrerseits der Analysevorrichtung (20) interindividuell oder intraindividuell trainiert worden sind, in eine weitere Wortinformation transkribiert wird;
Wiedergeben (340) des Sprachsignals (110) als entemotionalisiertes Sprachsignal (120), welches die mindestens eine Emotionsinformation (12) in eine weitere Wortinformation (14') gewandelt umfasst und die mindestens eine Wortinformation (14) umfasst.

12. Verfahren (300) nach Anspruch 11, welches umfasst:
Speichern des entemotionalisierten Sprachsignals (120) und/oder des erfassten Sprachsignals (110);
Wiedergeben des entemotionalisierten Sprachsignals (120) und/oder des erfassten Sprachsignals (110) zu einem beliebigen Zeitpunkt.
oder
Erkennen der mindestens einen Emotionsinformation (12) in dem Sprachsignal (110);
Analysieren der mindestens einen Emotionsinformation (12) hinsichtlich möglicher Transkriptionen des mindestens einen Emotionssignals (12) in n verschiedene weitere Wortinformationen (14'), wobei n eine natürliche Zahl größer oder gleich 1 ist und n eine Anzahl der Möglichkeiten angibt, die mindestens eine Emotionsinformation (12) zutreffend in die mindestens eine weitere Wortinformation (14') zu transkribieren;
Transkribieren der mindestens einen Emotionsinformation (12) in die n verschiedenen weiteren Wortinformationen (14').

13. Verfahren (300) nach einem der Ansprüche 11 oder 12, welches umfasst:
Identifizieren von unerwünschten und/oder neutralen und/oder positiven Emotionsinformationen (12) durch einen Nutzer mittels einer Bedienschnittstelle (70), oder
Identifizieren von unerwünschten und/oder neutralen und/oder positiven Emotionsinformationen (12) mittels eines Sensors (80), insbesondere welcher dazu ausgebildet ist, Biosignale zu messen, wie beispielsweise eine neurophysiologische Messung durchzuführen, oder ein Bild eines Nutzers zu erfassen und auszuwerten,
oder, welches umfasst:
Kategorisieren der mindestens einen erfassten Emotionsinformation (12) in Klassen unterschiedlicher Störqualität, insbesondere welche beispielsweise mindestens eine der folgenden Zuordnungen haben: Klasse 1 "sehr störend", Klasse 2"störend", Klasse 3 "weniger störend" und Klasse 4 "garnicht störend";
Reduzieren oder Unterdrücken des mindestens einen erfassten Emotionsinformation (12), welches in eine der Klassen 1 "sehr störend" oder Klasse 2"störend" kategorisiert worden ist und/oder
Hinzufügen der mindestens einen erfassten Emotionsinformation (12), welches in einer der Klassen 3 "weniger störend" oder Klasse 4 "garnicht störend" kategorisiert worden ist, zu dem entemotionalisierten Sprachsignal und/oder Hinzufügen von einer generierten Emotionsinformation (12'), um ein Verstehen des entemotionalisierten Sprachsignals (120) durch einen Nutzer zu unterstützen.

14. Verfahren (300) nach einem der vorherigen Ansprüche 11 bis 13, welches umfasst:
Wiedergeben des entemotionalisierten Sprachsignals (120), insbesondere in vereinfachter Sprache,
- durch eine künstliche Stimme und/oder
- durch Anzeige eines computergeschriebenen Textes und/oder
- durch Generieren und Anzeigen von Bildkartensymbolen und/oder
- durch Animation von Gebärdensprache, oder
Ausgleichen einer mit einem Nutzer assoziierten individuellen Hörstörung durch, insbesondere nichtlineare und/oder frequenzabhängige, Verstärkung des entemotionalisierten Sprachsignals (120), oder
Analysieren, ob ein, insbesondere durch einen Nutzer individuell definiertes, Störgeräusch in dem erfassten Sprachsignal (110) detektiert wird, Entfernen des detektierten Störgeräusches, oder
Detektieren einer aktuellen Ortskoordinate mittels GPS, Einstellen von mit der detektierten Ortskoordinate assoziierten Voreinstellungen zur Transkription von an der aktuellen Ortskoordinate erfassten Sprachsignalen (110), oder
Übertragen eines erfassten Sprachsignales (110) von einer Sprachsignalbearbeitungsvorrichtung (100) zu einer anderen Sprachsignalbearbeitungsvorrichtung (100) oder zu mehreren Sprachsignalbearbeitungsvorrichtungen (100,100-1 bis 100-6) mittels GPS, oder Funk, oder Bluetooth, oder LiFi (Light Fidelity).

15. Computerlesbares Speichermedium, umfassend Befehle, die bei der Ausführung durch einen Computer diesen veranlassen, das Verfahren (300) nach einem der Ansprüche 11 bis 14 auszuführen.

## Claims

1. Speech signal processing apparatus (100) for outputting a deemotionalized speech signal (120), the speech signal processing apparatus (100) including:
- a speech signal acquisition apparatus (10) configured to acquire a speech signal (110) including at least one piece of emotion information (12) and at least one piece of word information (14);
- an analysis apparatus (20), including a neural network or an artificial intelligence, configured to analyze the speech signal (110) with respect to the at least one piece of emotion information (12) and the at least one piece of word information (14),
- a processing apparatus (30), including a neural network or an artificial intelligence, configured to separate the speech signal (110) into the at least one piece of word information (14) and into the at least one piece of emotion information (12) and to process the speech signal (110), wherein the at least one piece of emotion information (12) is transcribed into a further piece of word information either on the basis of training data or on the basis of rule-based transcription of recognized emotions that in turn have been trained inter-individually or intra-individually by the analysis apparatus (20); and
- a coupling apparatus (40) and/or a reproduction apparatus (50) configured to reproduce the speech signal (110) as a deemotionalized speech signal (120) that includes the at least one piece of emotion information (12) converted into the further piece of word information (14') and that includes the at least one piece of word information (14).

2. Speech signal processing apparatus (100) according to claim 1, including a storage apparatus (60) that stores the deemotionalized speech signal (120) and/or the acquired speech signal (110) in order to reproduce the deemotionalized speech signal (120) at an arbitrary point in time, in particular to reproduce the stored speech signal (110) as a deemotionalized speech signal (120) at more than a single arbitrary point in time.

3. Speech signal processing apparatus (100) according to one of the preceding claims, wherein the processing apparatus (30) is configured to recognize the further piece of word information (14') included in the piece of emotion information (12) and to translate it into a deemotionalized speech signal (120) and to forward it to the reproduction apparatus (50) for reproduction by the reproduction apparatus (50) or to the coupling apparatus (40) configured to connect to an external reproduction apparatus (50), in particular a smartphone or tablet, to transmit the deemotionalized signal (120) for reproduction thereof.

4. Speech signal processing apparatus (100) according to one of the preceding claims, wherein the analysis apparatus (30) is configured to analyze interference noise and/or a piece of emotion information (12) in the speech signal (110), and the processing apparatus (40) is configured to remove the analyzed interference noise and/or the piece of emotion information (12) from the speech signal (110),
or
wherein the analysis apparatus (50) includes a neural network configured to transcribe the piece of emotion information (12) into the further piece of word information (14') on the basis of training data or on the basis of a rule-based transcription.

5. Speech signal processing apparatus (100) according to one of the preceding claims, wherein the reproduction apparatus (50) is configured to reproduce the deemotionalized speech signal (120) without the piece of emotion information (12) or with the piece of emotion information (12) transcribed into the further piece of word information (14') and/or with a newly applied piece of emotion information (12'),
or, wherein the reproduction apparatus (50) includes a loudspeaker and/or a screen to reproduce the deemotionalized speech signal (120), in particular in simplified language, by an artificial voice and/or by displaying a computer-written text and/or by generating and displaying image map symbols and/or by animation of sign language.

6. Speech signal processing apparatus (100) according to one of the preceding claims, wherein the speech signal processing apparatus (100) includes a GPS unit and/or a speaker recognition system configured to detect a current location coordinate of the speech signal processing apparatus (100) and/or to recognize the speaker expressing the speech signal (110) and to set associated presettings for transcription at the speech signal processing apparatus (100) on the basis of the detected current location coordinate and/or speaker information, or
includes signal exchange means configured to perform signal transmission of a detected speech signal with one or more other speech signal processing apparatuses (100, 100-1 to 100-6), in particular by means of radio, or Bluetooth, or LiFi (Light Fidelity).

7. Speech signal processing apparatus (100) according to one of the preceding claims, comprising an operating interface (70) configured to subdivide the at least one piece of emotion information (12) according to preferences set by a user into an undesired piece of emotion information and/or into a neutral piece of emotion information and/or into a positive piece of emotion information, or
configured to categorize the at least one piece of detected emotion information (12) into classes of different interference quality, in particular having the following assignment, for example: class 1 "very interfering", class 2 "interfering", class 3 "less interfering" and class 4 "not interfering at all"; and
to reduce or suppress the at least one piece of detected emotion information (12) categorized into one of classes 1 "very interfering" or class 2 "interfering" and/or
to add the at least one piece of detected emotion information (12) categorized into one of classes 3 "less interfering" or class 4 "not interfering at all" to the deemotionalized speech signal (120) and/or
to add a generated piece of emotion information (12') to the deemotionalized signal to support a user's understanding of the deemotionalized speech signal (120).

8. Speech signal processing apparatus (100) according to one of the preceding claims, comprising a sensor (80) configured, upon contact with a user, to identify undesired and/or neutral and/or positive pieces of emotion information (12) for the user either on the basis of training data or on the basis of rule-based transcription of recognized emotions that in turn have been trained inter-individually or intra-individually by the analysis apparatus (20), wherein the sensor (80) is configured to measure biosignals, such as to perform a neurophysiological measurement, or to acquire and evaluate an image of a user.

9. Speech signal processing apparatus (100) according to one of the preceding claims, comprising a compensation apparatus (90) configured to compensate for an individual hearing impairment associated with a user by non-linear and/or frequency-dependent amplification of the deemotionalized speech signal (120).

10. Speech signal reproduction system (200) comprising two or more speech signal processing apparatuses (100, 100-1 to 100-6) according to one of the preceding claims.

11. Method (300) for outputting a deemotionalized speech signal (120) in real time or after expiry of a time period, the method (300) comprising:
acquiring (310) a speech signal (110) including at least one piece of word information (14) and at least one piece of emotion information (12);
analyzing (320) the speech signal (110) with respect to the at least one piece of word information (14) and with respect to the at least one piece of emotion information (12);
separating (330) the speech signal into the at least one piece of word information (14) and into the at least one piece of emotion information (12) and processing the speech signal (110), wherein the at least one piece of emotion information (12) is transcribed into a further piece of word information either on the basis of training data or on the basis of rule-based transcription of recognized emotions that in turn have been trained inter-individually or intra-individually by the analysis apparatus (20);
reproducing (340) the speech signal (110) as a deemotionalized speech signal (120) that includes the at least one piece of emotion information (12) converted into a further piece of word information (14') and that includes the at least one piece of word information (14).

12. Method (300) according to claim 11, including:
storing the deemotionalized speech signal (120) and/or the acquired speech signal (110);
reproducing the deemotionalized speech signal (120) and/or the acquired speech signal (110) at an arbitrary point in time.
or
recognizing the at least one piece of emotion information (12) in the speech signal (110);
analyzing the at least one piece of emotion information (12) with respect to possible transcriptions of the at least one piece of emotion information (12) into n different further pieces of word information (14'), wherein n is a natural number greater than or equal to 1 and n indicates a number of possibilities for transcribing the at least one piece of emotion information (12) correctly into the at least one further piece of word information (14');
transcribing the at least one piece of emotion information (12) into the n different further pieces of word information (14').

13. Method (300) according to one of claims 11 or 12, including:
identifying undesired and/or neutral and/or positive pieces of emotion information (12) by a user by means of an operating interface (70), or
identifying undesired and/or neutral and/or positive pieces of emotion information (12) by means of a sensor (80), in particular configured to measure biosignals, such as to perform a neurophysiological measurement, or to acquire and evaluate an image of a user,
or including:
categorizing the at least one piece of detected emotion information (12) into classes of different interference quality, in particular having at least one of the following assignments, for example: class 1 "very interfering", class 2 "interfering", class 3 "less interfering" and class 4 "not interfering at all";
reducing or suppressing the at least one piece of detected emotion information (12) categorized into one of classes 1 "very interfering" or class 2 "interfering" and/or
adding the at least one piece of detected emotion information (12) categorized into one of classes 3 "less interfering" or class 4 "not interfering at all" to the deemotionalized speech signal and/or
adding a generated piece of emotion information (12') to support a user's understanding of the deemotionalized speech signal (120).

14. Method (300) according to one of the preceding claims 11 to 13, including:
reproducing the deemotionalized speech signal (120), in particular in simplified language,
- by an artificial voice and/or
- by displaying a computer-written text and/or
- by generating and displaying image map symbols and/or
- by animation of sign language, or
compensating for an individual hearing impairment associated with a user by, in particular non-linear and/or frequency-dependent, amplification of the deemotionalized speech signal (120), or
analyzing whether an interference noise, in particular individually defined by a user, is detected in the acquired speech signal (110),
removing the detected interference noise, or
detecting a current location coordinate by means of GPS,
setting presettings associated with the detected location coordinate for transcription of speech signals (110) acquired at the current location coordinate, or
transmitting an acquired speech signal (110) from one speech signal processing apparatus (100) to another speech signal processing apparatus (100) or to a plurality of speech signal processing apparatuses (100, 100-1 to 100-6) by means of GPS, or radio, or Bluetooth, or LiFi (Light Fidelity).

15. Computer-readable storage medium comprising instructions which, when executed by a computer, cause the latter to carry out the method (300) according to one of claims 11 to 14.

## Revendications

1. Dispositif de traitement de signal vocal (100) destiné à délivrer un signal vocal désémotionalisé (120), le dispositif de traitement de signal vocal (100) comprenant :
- un dispositif d'acquisition de signal vocal (10) configuré pour acquérir un signal vocal (110) comprenant au moins une information émotionnelle (12) et au moins une information verbale (14) ;
- un dispositif d'analyse (20) comprenant un réseau neuronal ou une intelligence artificielle, et configuré pour analyser le signal vocal (110) en ce qui concerne au moins une information émotionnelle (12) et au moins une information verbale (14),
un dispositif de traitement (30) comprenant un réseau neuronal ou une intelligence artificielle, et configuré pour séparer le signal vocal (110) en au moins une information verbale (14) et au moins une information émotionnelle (12) et pour traiter le signal vocal (110), au moins une information émotionnelle (12) étant transcrite en une information verbale supplémentaire soit à l'aide de données d'entraînement, soit à l'aide d'émotions reconnues par une transcription fondée sur des règles, lesdites émotions ayant elles-mêmes été entraînées de manière interindividuelle ou intraindividuelle par le dispositif d'analyse (20) ; et
- un dispositif de couplage (40) et/ou un dispositif de restitution (50) qui est/sont configuré(s) pour restituer le signal vocal (110) sous forme de signal vocal désémotionalisé (120), dans lequel au moins une information émotionnelle (12) est convertie en une information verbale supplémentaire (14') et qui comprend au moins une information verbale (14).

2. Dispositif de traitement de signal vocal (100) selon la revendication 1, comprenant un dispositif de stockage (60) stockant le signal vocal désémotionalisé (120) et/ou le signal vocal acquis (110), afin de restituer le signal vocal désémotionalisé (120) à un instant quelconque, en particulier afin de restituer le signal vocal stocké (110) à plusieurs instants, en tant que signal vocal désémotionalisé (120).

3. Dispositif de traitement de signal vocal (100) selon l'une quelconque des revendications précédentes, le dispositif de traitement (30) étant configuré pour reconnaître une information verbale supplémentaire (14') comprise dans l'information émotionnelle (12) et pour la convertir en un signal vocal désémotionalisé (120), et pour la transmettre au dispositif de restitution (50) en vue de sa restitution, ou au dispositif de couplage (40), lequel est configuré pour se connecter à un dispositif de restitution externe (50), notamment un smartphone ou une tablette, afin de transmettre le signal désémotionalisé (120) en vue de sa restitution.

4. Dispositif de traitement de signal vocal (100) selon l'une quelconque des revendications précédentes, dans lequel le dispositif d'analyse (30) est configuré pour analyser un bruit parasite et/ou une information émotionnelle (12) dans le signal vocal (110), et le dispositif de traitement (40) est configuré pour retirer du signal vocal (110) le bruit parasite et/ou l'information émotionnelle (12) analysés,
ou
dans lequel le dispositif d'analyse (50) comprend un réseau neuronal configuré pour transcrire l'information émotionnelle (12), sur la base de données d'entraînement ou sur la base d'une transcription fondée sur des règles, en une information verbale supplémentaire (14').

5. Dispositif de traitement de signal vocal (100) selon l'une quelconque des revendications précédentes, dans lequel le dispositif de restitution (50) est configuré pour restituer le signal vocal désémotionalisé (120) sans l'information émotionnelle (12) ou avec l'information émotionnelle (12) transcrite en une information verbale supplémentaire (14') et/ou avec une information émotionnelle (12') nouvellement apposée,
ou, le dispositif de restitution (50) comprenant un haut-parleur et/ou un écran afin de restituer le signal vocal désémotionalisé (120), notamment en langage simplifié, au moyen d'une voix artificielle et/ou par l'affichage d'un texte généré par ordinateur et/ou par la génération et l'affichage de symboles de cartes-images et/ou par l'animation de la langue des signes.

6. Dispositif de traitement de signal vocal (100) selon l'une quelconque des revendications précédentes, le dispositif de traitement de signal vocal (100) comprenant une unité GPS et/ou un système de reconnaissance du locuteur, lesquels sont configurés pour acquérir une coordonnée de localisation actuelle du dispositif de traitement de signal vocal (100) et/ou pour reconnaître le locuteur qui énonce le signal vocal (110), et pour régler, sur la base de la coordonnée de localisation actuelle acquise et/ou d'une information de locuteur, des préréglages associés à la transcription sur le dispositif de traitement de signal vocal (100), ou
lequel comprend un dispositif d'échange de signaux configuré pour transmettre un signal vocal acquis à un ou plusieurs autres dispositifs de traitement de signal vocal (100, 100-1 à 100-6), notamment par radio, par Bluetooth ou par LiFi (Light Fidelity).

7. Dispositif de traitement de signal vocal (100) selon l'une quelconque des revendications précédentes, comportant une interface de commande (70) configurée pour subdiviser au moins une information émotionnelle (12), conformément à des préférences définies par un utilisateur, en une information émotionnelle indésirable et/ou une information émotionnelle neutre et/ou une information émotionnelle positive, ou
qui est configurée pour catégoriser au moins une information émotionnelle acquise (12) en classes de qualité perturbatrice différente, notamment avec, à titre d'exemple, l'attribution suivante : classe 1 « très perturbante », classe 2 « perturbante », classe 3 « moins perturbante » et classe 4 « pas du tout perturbante » ; et pour réduire ou supprimer au moins une information émotionnelle acquise (12), laquelle a été catégorisée dans l'une des classes 1 « très perturbante » ou classe 2 « perturbante », et/ou
pour ajouter au moins une information émotionnelle acquise (12), laquelle a été catégorisée dans l'une des classes 3 « moins perturbante » ou classe 4 « pas du tout perturbante », au signal vocal désémotionalisé (120) et/ou pour ajouter une information émotionnelle générée (12') au signal désémotionalisé afin de faciliter la compréhension, par un utilisateur, du signal vocal désémotionalisé (120).

8. Dispositif de traitement de signal vocal (100) selon l'une quelconque des revendications précédentes, comportant un capteur (80) qui, au contact d'un utilisateur, est configuré pour identifier, pour l'utilisateur, des informations émotionnelles indésirables et/ou neutres et/ou positives (12) soit à l'aide de données d'entraînement, soit à l'aide d'émotions reconnues par transcription fondée sur des règles, lesquelles ont elles-mêmes été entraînées de manière interindividuelle ou intraindividuelle par le dispositif d'analyse (20), le capteur (80) étant configuré pour mesurer des biosignaux, par exemple pour effectuer une mesure neurophysiologique, ou pour acquérir et évaluer une image d'un utilisateur.

9. Dispositif de traitement de signal vocal (100) selon l'une quelconque des revendications précédentes, comprenant un dispositif de compensation (90) configuré pour compenser un trouble auditif individuel associé à un utilisateur par une amplification non linéaire et/ou dépendante de la fréquence du signal vocal désémotionalisé (120).

10. Système de restitution de signal vocal (200) comprenant deux ou plusieurs dispositifs de traitement de signal vocal (100, 100-1 à 100-6) selon l'une quelconque des revendications précédentes.

11. Procédé (300) pour délivrer un signal vocal désémotionalisé (120) en temps réel ou après l'écoulement d'un laps de temps, le procédé (300) comprenant :
acquérir (310) un signal vocal (110) comprenant au moins une information verbale (14) et au moins une information émotionnelle (12) ;
analyser (320) le signal vocal (110) quant à au moins une information verbale (14) et quant à au moins une information émotionnelle (12) ; séparer (330) le signal vocal en au moins une information verbale (14) et au moins une information émotionnelle (12) et traiter le signal vocal (110), au moins une information émotionnelle (12) étant transcrite en une information verbale supplémentaire sur la base de données d'entraînement ou sur la base d'émotions reconnues par une transcription fondée sur des règles, lesquelles ont elles-mêmes été entraînées de manière interindividuelle ou intraindividuelle par le dispositif d'analyse (20) ;
restituer (340) le signal vocal (110) sous forme de signal vocal désémotionalisé (120), lequel comprend au moins une information émotionnelle (12) convertie en une information verbale supplémentaire (14') et comprend au moins une information verbale (14).

12. Procédé (300) selon la revendication 11, comprenant :
stocker le signal vocal désémotionalisé (120) et/ou le signal vocal acquis (110) ;
restituer le signal vocal désémotionalisé (120) et/ou le signal vocal acquis (110) à un instant quelconque.
ou
reconnaître au moins une information émotionnelle (12) dans le signal vocal (110) ;
analyser au moins une information émotionnelle (12) quant à des transcriptions possibles d'au moins un signal émotionnel (12) en n informations verbales supplémentaires différentes (14'), n étant un nombre naturel supérieur ou égal à 1 et n indiquant un nombre de possibilités de transcrire correctement au moins une information émotionnelle (12) en au moins une information verbale supplémentaire (14') ;
transcrire au moins une information émotionnelle (12) en n informations verbales supplémentaires différentes (14').

13. Procédé (300) selon l'une quelconque des revendications 11 ou 12, comprenant :
identifier des informations émotionnelles indésirables et/ou neutres et/ou positives (12) par un utilisateur au moyen d'une interface de commande (70), ou
identifier des informations émotionnelles indésirables et/ou neutres et/ou positives (12) au moyen d'un capteur (80), notamment configuré pour mesurer des biosignaux, par exemple pour effectuer une mesure neurophysiologique, ou pour acquérir et évaluer une image d'un utilisateur,
ou, comprenant :
catégoriser au moins une information émotionnelle acquise (12) en classes de qualité perturbatrice différente, notamment avec, à titre d'exemple, au moins l'une des attributions suivantes : classe 1 « très perturbante », classe 2 « perturbante », classe 3 « moins perturbante » et classe 4 « pas du tout perturbante » ;
réduire ou supprimer au moins une information émotionnelle acquise (12), laquelle a été catégorisée dans l'une des classes 1 « très perturbante » ou classe 2 « perturbante », et/ou
ajouter au moins une information émotionnelle acquise (12), laquelle a été catégorisée dans l'une des classes 3 « moins perturbante » ou classe 4 « pas du tout perturbante », au signal vocal désémotionalisé (120), et/ou
ajouter une information émotionnelle générée (12') afin de faciliter la compréhension du signal vocal désémotionalisé (120) par un utilisateur.

14. Procédé (300) selon l'une quelconque des revendications 11 à 13 précédentes, comprenant :
restituer le signal vocal désémotionalisé (120), notamment en langage simplifié,
- par une voix artificielle et/ou
- par l'affichage d'un texte généré par ordinateur et/ou
- par la génération et l'affichage de symboles de cartes-images et/ou
- par l'animation de la langue des signes, ou
compenser un trouble auditif individuel associé à un utilisateur par une amplification, notamment non linéaire et/ou dépendante de la fréquence, du signal vocal désémotionalisé (120), ou
analyser si un bruit parasite, notamment défini individuellement par un utilisateur, est détecté dans le signal vocal acquis (110), retirer le bruit parasite détecté, ou
détecter une coordonnée de localisation actuelle au moyen du GPS, régler des préréglages associés à la coordonnée de localisation détectée pour la transcription de signaux vocaux (110) acquis à la coordonnée de localisation actuelle, ou
transmettre un signal vocal acquis (110) d'un dispositif de traitement de signal vocal (100) vers un autre dispositif de traitement de signal vocal (100) ou vers une pluralité de dispositifs de traitement de signal vocal (100, 100-1 à 100-6) au moyen du GPS, de la radio, du Bluetooth ou du LiFi (Light Fidelity).

15. Support de stockage lisible par ordinateur, comprenant des instructions qui, lorsqu'elles sont exécutées par un ordinateur, amènent celui-ci à exécuter le procédé (300) selon l'une quelconque des revendications 11 à 14.
